# EUROPEAN PATENT APPLICATION

(11) **EP 4 800 938 A1**
(43) Date of publication of application: **02.09.2026**
(21) Application number: 24898220.9
(22) Date of filing: 29.11.2024
(51) Int. Cl.: H04B 7/06, H04B 7/0456, H04W 72/231, H04B 17/318, H04L 5/00

(54) **METHOD AND APPARATUS FOR TRANSMITTING AND RECEIVING CHANNEL STATE INFORMATION REPORT IN COMMUNICATION SYSTEM**

(30) Priority: 01.12.2023 KR 20230172544
(71) Applicant: Samsung Electronics Co., Ltd., Suwon-si, Gyeonggi-do 16677 (KR)
(72) Inventor: JEONG, Woojae, Suwon-si, Gyeonggi-do 16677 (KR); LEE, Seunghyun, Suwon-si, Gyeonggi-do 16677 (KR)
(74) Representative: Nederlandsch Octrooibureau
(86) International application number: PCT/KR2024/019321
(87) International publication number: WO 2025/116626

(57) **Abstract**

Disclosed in various embodiments of the present disclosure are a method and an apparatus for transmitting and receiving a channel state information report in a communication system. A method performed by a terminal in a communication system, according to one embodiment of the present disclosure, comprises the steps of: receiving a channel state information (CSI) report configuration through upper layer signaling, wherein the CSI report configuration includes a plurality of channel state information reference signal (CSI-RS) resources; when the CSI report configuration includes a plurality of codebook configurations, identifying a correspondence between the plurality of CSI-RS resources and the plurality of codebook configurations; obtaining a CSI report on the basis of the correspondence; and transmitting the CSI report.

## Description

### [Technical Field]

The disclosure generally relates to a communication system and, more particularly, to a method and an apparatus for transmitting and receiving a channel state information (CSI) report in a communication system.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th-generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve into various formfactors such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 µ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### [Disclosure of Invention]

### [Technical Problem]

Various embodiments of the disclosure may provide a method and an apparatus for transmitting and receiving a channel state information report in a communication system.

The technical subjects pursued in various embodiments of the disclosure may not be limited to the above-mentioned matters, and other technical subjects which are not mentioned herein may be considered by those skilled in the art from various embodiments of the disclosure to be described below.

### [Solution to Problem]

According to an embodiment of the disclosure, a method performed by a terminal in a communication system may be provided.

According to an embodiment of the disclosure, the method may include receiving a channel state information (CSI) report configuration through higher layer signaling.

According to an embodiment of the disclosure, the CSI report configuration may include multiple channel state information reference signal (CSI-RS) resources.

According to an embodiment of the disclosure, the method may include, in case that the CSI report configuration includes multiple codebook configurations, identifying a correspondence relationship between the multiple CSI-RS resources and the multiple codebook configurations.

According to an embodiment of the disclosure, the method may include acquiring a CSI report, based on the correspondence relationship.

According to an embodiment of the disclosure, the method may include transmitting the CSI report.

According to an embodiment of the disclosure, in case that the CSI report configuration includes information indicating CSI port virtualization related to the multiple CSI-RS resources, the CSI report configuration may include the multiple codebook configurations.

According to an embodiment of the disclosure, in case that the CSI report is configured as a CSI-related parameter, in case that the CSI report configuration includes a codebook-level CSI report configuration, the CSI report may include a first number of bits for indicating multiple CSI-RS resource indicators (CRIs) for multiple codebook configurations, the first number may satisfy a product of the number of the multiple codebook configurations and $\left⌈{log}_{2} {K}_{R}^{CSI - RS}\right⌉ , {K}_{R}^{CSI - RS}$ may be the number of the multiple CSI-RS resources, and the CSI report may include multiple CSI-related parameters corresponding to the multiple CRIs, and in case that the CSI report configuration does not include a codebook-level CSI report configuration, the CSI report may include a second number of bits for indicating one CRI, the second number may be $\left⌈{log}_{2} {K}_{R}^{CSI - RS}\right⌉$, and the CSI report may include a CSI-related parameter corresponding to the one CRI.

According to an embodiment of the disclosure, in case that the CSI report is configured as a reference signal received power (RSRP)-related parameter, in case that the CSI report configuration includes a codebook-level CSI report configuration, the CSI report may include a third number of bits for indicating multiple CRIs for multiple codebook configurations, the third number may satisfy a product of the number of the multiple codebook configurations, the number of reported reference signals (RSs), and $\left⌈{log}_{2} {K}_{R}^{CSI - RS}\right⌉ , {K}_{R}^{CSI - RS}$ may be the number of the multiple CSI-RS resources, the number of the reported RSs may be configured through the higher layer signaling, the CSI report may include multiple RSRPs corresponding to the multiple CRIs, a largest RSRP among the multiple RSRPs may be indicated by 7 bits, and remaining RSRPs except for the largest RSRP among the multiple RSRPs may be each indicated as differential values, based on 4 bits.

According to an embodiment of the disclosure, in case that the CSI report is configured as an RSRP-related parameter, in case that the CSI report configuration does not include a codebook-level CSI report configuration, the CSI report may include a fourth number of bits for indicating one CRI, and the fourth number may be $\left⌈{log}_{2} {K}_{R}^{CSI - RS}\right⌉$, wherein the CSI report includes an RSRP corresponding to the one CRI in case that the number of the reported RSs is configured as 1, and the RSRP is indicated by 7 bits, and wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

According to an embodiment of the disclosure, the correspondence relationship may be identified based on the multiple CSI-RS resources being distributed in ascending order according to an ascending order of the multiple codebook configurations.

According to an embodiment of the disclosure, a terminal in a communication system may be provided.

According to an embodiment of the disclosure, the terminal may include a transceiver, and a processor connected to the transceiver.

According to an embodiment of the disclosure, the processor may be configured to receive a channel state information (CSI) report configuration through higher layer signaling.

According to an embodiment of the disclosure, the CSI report configuration may include multiple channel state information reference signal (CSI-RS) resources.

According to an embodiment of the disclosure, the processor may be configured to, in case that the CSI report configuration includes multiple codebook configurations, identify a correspondence relationship between the multiple CSI-RS resources and the multiple codebook configurations.

According to an embodiment of the disclosure, the processor may be configured to acquire a CSI report, based on the correspondence relationship.

According to an embodiment of the disclosure, the processor may be configured to transmit the CSI report.

According to an embodiment of the disclosure, in case that the CSI report configuration includes information indicating CSI port virtualization related to the multiple CSI-RS resources, the CSI report configuration may include the multiple codebook configurations.

According to an embodiment of the disclosure, in case that the CSI report is configured as a CSI-related parameter, in case that the CSI report configuration includes a codebook-level CSI report configuration, the CSI report may include a first number of bits for indicating multiple CSI-RS resource indicators (CRIs) for multiple codebook configurations, the first number may satisfy a product of the number of the multiple codebook configurations and $\left⌈{log}_{2} {K}_{R}^{CSI - RS}\right⌉ , {K}_{R}^{CSI - RS}$, may be the number of the multiple CSI-RS resources, and the CSI report may include multiple CSI-related parameters corresponding to the multiple CRIs, and in case that the CSI report configuration does not include a codebook-level CSI report configuration, the CSI report may include a second number of bits for indicating one CRI, the second number may be $\left⌈{log}_{2} {K}_{R}^{CSI - RS}\right⌉$, and the CSI report may include a CSI-related parameter corresponding to the one CRI.

According to an embodiment of the disclosure, in case that the CSI report is configured as a reference signal received power (RSRP)-related parameter, in case that the CSI report configuration includes a codebook-level CSI report configuration, the CSI report may include a third number of bits for indicating multiple CRIs for multiple codebook configurations, the third number may satisfy a product of the number of the multiple codebook configurations, the number of reported reference signals (RSs), and $\left⌈{log}_{2} {K}_{R}^{CSI - RS}\right⌉ , {K}_{R}^{CSI - RS}$, may be the number of the multiple CSI-RS resources, the number of the reported RSs may be configured through the higher layer signaling, the CSI report may include multiple RSRPs corresponding to the multiple CRIs, a largest RSRP among the multiple RSRPs may be indicated by 7 bits, and remaining RSRPs except for the largest RSRP among the multiple RSRPs may be each indicated as differential values, based on 4 bits.

According to an embodiment of the disclosure, in case that the CSI report is configured as an RSRP-related parameter, in case that the CSI report configuration does not include a codebook-level CSI report configuration, the CSI report may include a fourth number of bits for indicating one CRI, and the fourth number may be $\left⌈{log}_{2} {K}_{R}^{CSI - RS}\right⌉$, wherein the CSI report includes an RSRP corresponding to the one CRI in case that the number of the reported RSs is configured as 1, and the one RSRP is indicated by 7 bits, and wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

According to an embodiment of the disclosure, the correspondence relationship may be identified based on the multiple CSI-RS resources being distributed in ascending order according to an ascending order of the multiple codebook configurations.

According to an embodiment of the disclosure, a method performed by a base station in a communication system may be provided.

According to an embodiment of the disclosure, the method may include transmitting a channel state information (CSI) report configuration through higher layer signaling.

According to an embodiment of the disclosure, the CSI report configuration may include multiple channel state information reference signal (CSI-RS) resources.

According to an embodiment of the disclosure, the method may include receiving a CSI report related to the CSI report configuration.

According to an embodiment of the disclosure, in case that the CSI report configuration includes multiple codebook configurations, a correspondence relationship between the multiple CSI-RS resources and the multiple codebook configurations may be satisfied.

According to an embodiment of the disclosure, in case that the CSI report configuration includes information indicating CSI port virtualization related to the multiple CSI-RS resources, the CSI report configuration may include the multiple codebook configurations.

According to an embodiment of the disclosure, in case that the CSI report is configured as a CSI-related parameter, in case that the CSI report configuration includes a codebook-level CSI report configuration, the CSI report may include a first number of bits for indicating multiple CSI-RS resource indicators (CRIs) for multiple codebook configurations, the first number may satisfy a product of the number of the multiple codebook configurations and $\left⌈{log}_{2} {K}_{R}^{CSI - RS}\right⌉ , {K}_{R}^{CSI - RS}$, may be the number of the multiple CSI-RS resources, and the CSI report may include multiple CSI-related parameters corresponding to the multiple CRIs, and in case that the CSI report configuration does not include a codebook-level CSI report configuration, the CSI report may include a second number of bits for indicating one CRI, the second number may be ${K}_{R}^{CSI - RS}$, and the CSI report may include a CSI-related parameter corresponding to the one CRI.

According to an embodiment of the disclosure, in case that the CSI report is configured as a reference signal received power (RSRP)-related parameter, in case that the CSI report configuration includes a codebook-level CSI report configuration, the CSI report may include a third number of bits for indicating multiple CRIs for multiple codebook configurations, the third number may satisfy a product of the number of the multiple codebook configurations, the number of reported reference signals (RSs), and $\left⌈{log}_{2} {K}_{R}^{CSI - RS}\right⌉ , {K}_{R}^{CSI - RS}$ may be the number of the multiple CSI-RS resources, the number of the reported RSs may be configured through the higher layer signaling, the CSI report may include multiple RSRPs corresponding to the multiple CRIs, a largest RSRP among the multiple RSRPs may be indicated by 7 bits, and remaining RSRPs except for the largest RSRP among the multiple RSRPs may be each indicated as differential values, based on 4 bits.

According to an embodiment of the disclosure, in case that the CSI report is configured as an RSRP-related parameter, in case that the CSI report configuration does not include a codebook-level CSI report configuration, the CSI report may include a fourth number of bits for indicating one CRI, and the fourth number may be $\left⌈{log}_{2} {K}_{R}^{CSI - RS}\right⌉$, wherein the CSI report includes an RSRP corresponding to the one CRI in case that the number of the reported RSs is configured as 1, and the one RSRP is indicated by 7 bits, and wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

According to an embodiment of the disclosure, the correspondence relationship may be satisfied based on the multiple CSI-RS resources being distributed in ascending order according to an ascending order of the multiple codebook configurations.

According to an embodiment of the disclosure, a base station in a communication system may be provided.

According to an embodiment of the disclosure, the base station may include a transceiver, and a processor connected to the transceiver.

According to an embodiment of the disclosure, the processor may be configured to transmit a channel state information (CSI) report configuration through higher layer signaling.

According to an embodiment of the disclosure, the CSI report configuration may include multiple channel state information reference signal (CSI-RS) resources.

According to an embodiment of the disclosure, the processor may be configured to receive a CSI report related to the CSI report configuration.

According to an embodiment of the disclosure, in case that the CSI report configuration includes multiple codebook configurations, a correspondence relationship between the multiple CSI-RS resources and the multiple codebook configurations may be satisfied.

According to an embodiment of the disclosure, in case that the CSI report configuration includes information indicating CSI port virtualization related to the multiple CSI-RS resources, the CSI report configuration may include the multiple codebook configurations.

According to an embodiment of the disclosure, in case that the CSI report is configured as a CSI-related parameter, in case that the CSI report configuration includes a codebook-level CSI report configuration, the CSI report may include a first number of bits for indicating multiple CSI-RS resource indicators (CRIs) for multiple codebook configurations, the first number may satisfy a product of the number of the multiple codebook configurations and $\left⌈{log}_{2} {K}_{R}^{CSI - RS}\right⌉ , {K}_{R}^{CSI - RS}$*,* may be the number of the multiple CSI-RS resources, and the CSI report may include multiple CSI-related parameters corresponding to the multiple CRIs, and in case that the CSI report configuration does not include a codebook-level CSI report configuration, the CSI report may include a second number of bits for indicating one CRI, the second number may be $\left⌈{log}_{2} {K}_{R}^{CSI - RS}\right⌉$, and the CSI report may include a CSI-related parameter corresponding to the one CRI.

According to an embodiment of the disclosure, in case that the CSI report is configured as a reference signal received power (RSRP)-related parameter, in case that the CSI report configuration includes a codebook-level CSI report configuration, the CSI report may include a third number of bits for indicating multiple CRIs for multiple codebook configurations, the third number may satisfy a product of the number of the multiple codebook configurations, the number of reported reference signals (RSs), and $\left⌈{log}_{2} {K}_{R}^{CSI - RS}\right⌉ , {K}_{R}^{CSI - RS}$, may be the number of the multiple CSI-RS resources, the number of the reported RSs may be configured through the higher layer signaling, the CSI report may include multiple RSRPs corresponding to the multiple CRIs, a largest RSRP among the multiple RSRPs may be indicated by 7 bits, and remaining RSRPs except for the largest RSRP among the multiple RSRPs may be each indicated as differential values, based on 4 bits.

According to an embodiment of the disclosure, in case that the CSI report is configured as an RSRP-related parameter, in case that the CSI report configuration does not include a codebook-level CSI report configuration, the CSI report may include a fourth number of bits for indicating one CRI, and the fourth number may be $\left⌈{log}_{2} {K}_{R}^{CSI - RS}\right⌉$, wherein the CSI report includes an RSRP corresponding to the one CRI in case that the number of the reported RSs is configured as 1, and the one RSRP is indicated by 7 bits, and wherein the CSI report includes multiple RSRPs in case that the number of the reported RSs is configured as a value greater than 1, the one CRI corresponds to a largest RSRP among the multiple RSRPs, the largest RSRP is indicated by 7 bits, and each of remaining RSRPs except for the largest RSRP among the multiple RSRPs is indicated as a differential value, based on 4 bits, and the number of the remaining RSRPs is less than the number of the reported RSs by 1.

According to an embodiment of the disclosure, the correspondence relationship may be satisfied based on the multiple CSI-RS resources being distributed in ascending order according to an ascending order of the multiple codebook configurations.

Various embodiments of the disclosure as described above are merely some of preferred embodiments of the disclosure, and various embodiments reflecting technical features of the various embodiments of the disclosure may be derived and understood by those having ordinary skill in the art, based on the detailed description to be described below.

### [Advantageous Effects of Invention]

Various embodiments of the disclosure can provide a method and an apparatus for transmitting and receiving a channel state information report in a communication system.

Various embodiments of the disclosure enables reduction of overhead for a channel state information report/feedback in a communication system.

Advantageous effects obtainable from various embodiments of the disclosure may not be limited to the above-mentioned effects, and other effects which are not mentioned herein may be clearly derived and understood, based on the following description, by those skilled in the art to which the disclosure pertains.

### [Brief Description of Drawings]

The accompanying drawings are intended to help an understanding of various embodiments of the disclosure, and provide various embodiments in conjunction with the detailed description. However, the technical features of various embodiments of the disclosure are not limited to specific drawings, and the features set forth in the respective drawings may be combined to form a new embodiment. Reference numerals in the respective drawings denote structural elements.
FIG. 1 illustrates a basic structure of a time-frequency domain in a wireless communication system to which an embodiment of the disclosure is applicable.
FIG. 2 illustrates a structure of a frame, a subframe, and a slot in a wireless communication system to which an embodiment of the disclosure is applicable.
FIG. 3A illustrates a resource configuration, a channel measurement configuration, and a channel state report configuration necessary for supporting channel state reporting in NR to which an embodiment of the disclosure is applicable.
FIG. 3B illustrates an example of a beam group pattern supported for a type-1 channel state report in NR to which an embodiment of the disclosure is applicable.
FIG. 4 illustrates an example of an aperiodic CSI reporting method to which an embodiment of the disclosure is applicable.
FIG. 5 illustrates an example of port virtualization to which an embodiment of the disclosure is applicable.
FIG. 6 illustrates an example of port virtualization to which an embodiment of the disclosure is applicable.
FIG. 7 illustrates an example of port virtualization to which an embodiment of the disclosure is applicable.
FIG. 8 illustrates an example of port virtualization to which an embodiment of the disclosure is applicable.
FIG. 9 illustrates an example of a CSI report configuration and a CSI resource configuration to which an embodiment of the disclosure is applicable.
FIG. 10 illustrates an example of a CSI feedback method to which an embodiment of the disclosure is applicable.
FIG. 11 illustrates an example of a CSI feedback method according to an embodiment of the disclosure.
FIG. 12 illustrates an example of a CSI report configuration according to an embodiment of the disclosure.
FIG. 13 illustrates an example of a CSI report configuration according to an embodiment of the disclosure.
FIG. 14 illustrates an example of CSI-RS transmission of a base station and CSI feedback transmission of a terminal according to an embodiment of the disclosure.
FIG. 15 illustrates an example of a CSI report of a terminal according to an embodiment of the disclosure.
FIG. 16 illustrates an example of a CSI report of a terminal according to an embodiment of the disclosure.
FIG. 17 illustrates an example of a CSI report of a terminal according to an embodiment of the disclosure.
FIG. 18 illustrates an example of a CSI report of a terminal according to an embodiment of the disclosure.
FIG. 19 illustrates an example of an operation of a terminal according to an embodiment of the disclosure.
FIG. 20 illustrates an example of an operation of a base station according to an embodiment of the disclosure.
FIG. 21 illustrates a structure of a UE in a wireless communication system according to an embodiment of the disclosure.
FIG. 22 illustrates a structure of a base station in a wireless communication system according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on content throughout the specification.

Furthermore, embodiments of the disclosure will be described using terms employed in some communication standards (e.g., long term evolution (LTE) or new radio (NR) defined by the 3rd generation partnership project (3GPP)), but they are for illustrative purposes only. Various embodiments of the disclosure may also be easily applied to other communication systems through modifications. That is, the disclosure is not limited to the 5G communication system or LTE communication system, and may also be applied to 6G or beyond-6G communication systems.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of things. Since the Internet of things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

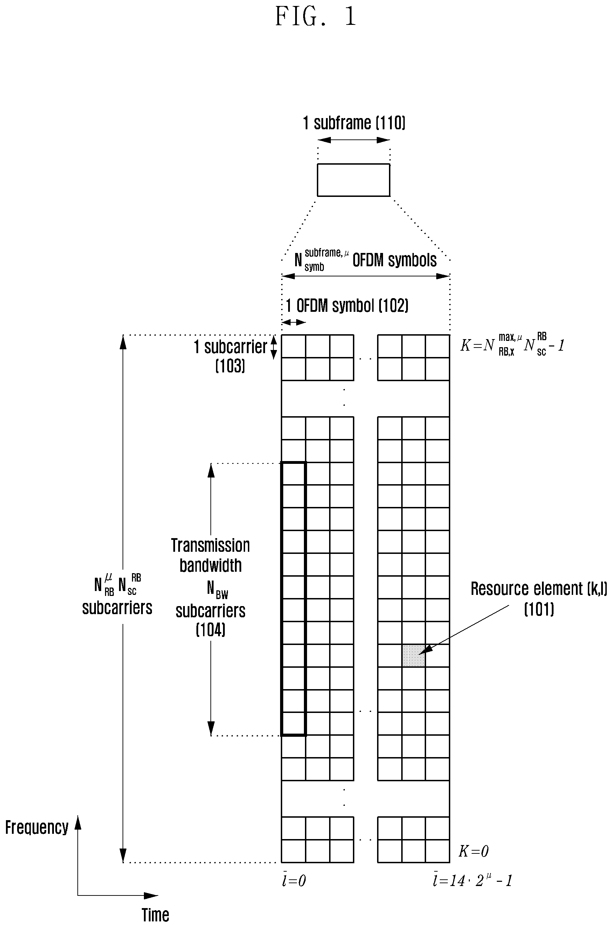

FIG. 1 illustrates a basic structure of a time-frequency domain in a wireless communication system to which an embodiment of the disclosure is applicable.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, ${N}_{SC}^{RB}$ (for example, 12) consecutive REs may constitute one resource block (RB) 104. In the time domain, one subframe 110 may include multiple OFDM symbols 102. For example, the length of one subframe may be 1ms.

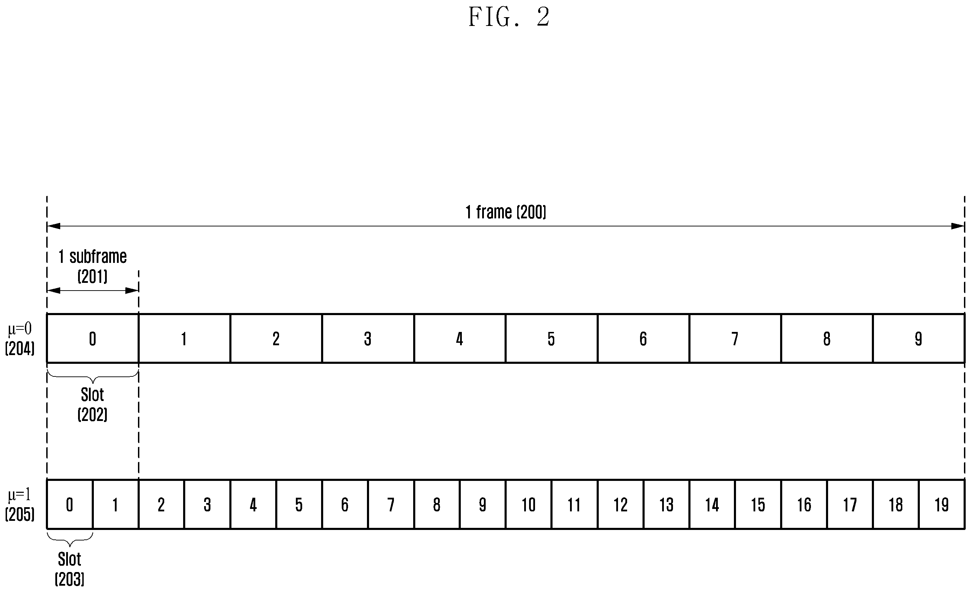

FIG. 2 illustrates a structure of a frame, a subframe, and a slot in a wireless communication system to which an embodiment of the disclosure is applicable.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot ${N}_{symb}^{slot} = 14$). One subframe 201 may include one or multiple slots 202 and 203, and the number of slots 202 and 203 per one subframe 201 may vary depending on configuration values µ for the subcarrier spacing 204 or 205. The example in FIG. 2 illustrates a case in which the subcarrier spacing configuration value is µ=0 (204), and a case in which µ=1 (205). In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Unlike LTE, in NR, a resource configuration, a channel measurement configuration, and a channel state report configuration necessary for supporting channel state information reporting may be used to support a channel state report configuration more flexible than that of LTE.

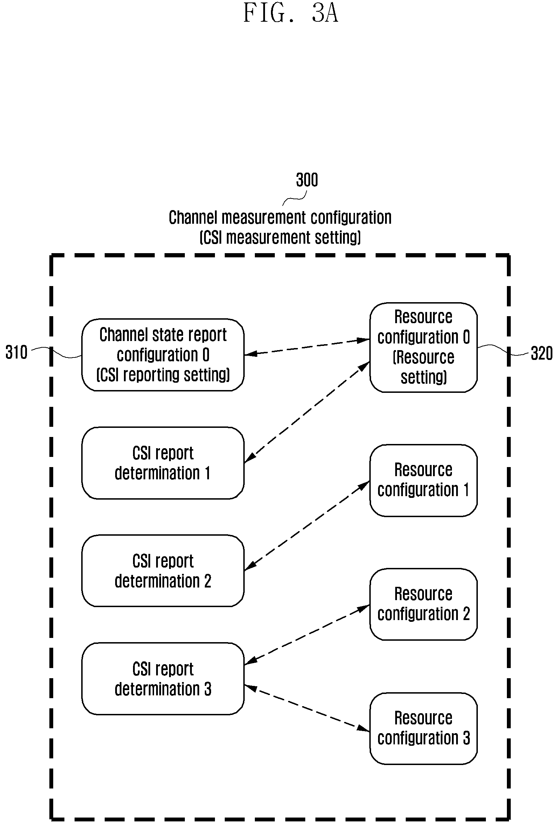

FIG. 3A is a diagram illustrating a resource configuration, a channel measurement configuration, and a channel state report configuration necessary for supporting channel state reporting in NR to which an embodiment of the disclosure is applicable.

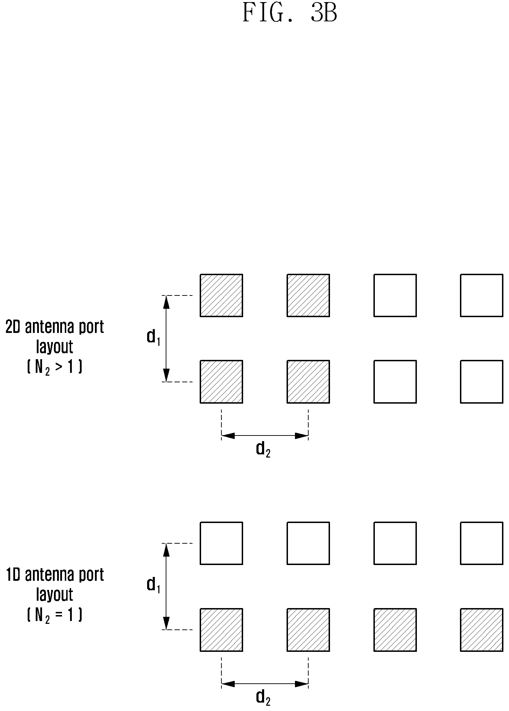

FIG. 3B is a diagram illustrating an example of a beam group pattern supported for a type-1 channel state report in NR to which an embodiment of the disclosure is applicable.

Referring to FIG. 3A, a resource configuration, a channel measurement configuration, and a channel state report configuration may include the following configuration information.
∘ Channel state report configuration (CSI reporting setting) 310: This may configure turn-on and turn-off of a report parameter (e.g., a rank indicator (RI), a preceding matrix indicator (PMI), or a channel quality indicator (CQI)) necessary for a channel state report. In addition, a type of a channel state report (e.g., type 1 (Type I, an implicit reporting form as a channel state report having a low resolution) or type 2 (Type II, a form of a channel state report having a high resolution, which explicitly reports an eigenvector and a covariance matrix by using a channel state report of a linear combination form) may be configured. More specifically, a channel state report configuration (whether to report an RI, a PMI, a CQI, a beam indicator (BI), or a CSI-RS resource indicator (CRI) is configurable as an individual configuration or a combined configuration), a reporting method (the method is one of periodic, aperiodic, and semi-persistent, and the aperiodic and the semi-persistent may be configured as one parameter), codebook configuration information, a PMI type (wideband or subband), a channel state report type (implicit or explicit, or Type I or Type II), a channel quality report type (CQI or RSRP), and a resource configuration for a channel state report may be supported.
∘ Resource configuration (resource setting) 320: This is a configuration including configuration information on a reference signal necessary for channel state measurement. A CSI-RS resource for channel and interference measurement and a CSI-IM resource for interference measurement may be configured through the resource configuration, and multiple resource configurations may exist for this purpose. In addition, a transmission type (periodic, aperiodic, or semi-persistent) of a corresponding reference signal, a transmission period of the reference signal, and an offset are also configurable.
∘ Channel measurement configuration (CSI measurement setting) 300: This configures mapping or a connection between a channel state report configuration and a resource configuration. For example, when N channel state report configurations and M resource configurations exist, L links configuring mapping between the multiple channel state report configurations and the resource configurations may be included in the channel measurement configuration. In addition, an association configuration between a reference signal configuration and a reporting timing may also be configured.

In NR, in addition to periodic and aperiodic channel state reporting supported in LTE, semi-persistent reference signal transmission and channel state information are supported. Table 2 below shows parameters configured in a channel state report configuration (CSI Report Config).

**[Table 2]**

| Parameter name | Description | Value range |
|---|---|---|
| CSI-ReportConfigId | Report config ID | |
| ServCellIndex | Report serving cell ID | |
| resourcesForChannelMe asurement | NZP CSI-RS resource config ID for channel measurement | |
| csi-IM-ResourcesForInterference | CSI-IM resource config ID for interference measurement | |
| nzp-CSI-RS-ResourcesforInterference | NZP CSI-RS resource config ID for interference measurement | |
| reportConfigType | Transmission type of CSI reporting | periodic, semiPersistentOnPUCCH , semiPersistentOnPUSCH , aperiodic |
| reportQuantity | CSI parameters to be reported | none, cri-RI-PMI-CQI, cri-RI-i1, cri-RI-i1-CQI, cri-RI-CQl, cri-RSRP, ssb-Index-RSRP, cri-RI-LI-PMI-CQI |
| reportFreqConfiguration | Reporting configuration on frequency domain | |
| cqi-FormatIndicator | CQI format | wideband CQI, subband CQI |
| pmi-Formatindicator | PMI format | wideband PMI, subband PMI |
| csi-ReportingBand | CSI reporting band configuration | |

In the above, CSI-ReportConfigId is used to configure an ID of the corresponding channel state report configuration, and ServCellIndex indicates an ID of a cell for the corresponding channel state report. resourcesForChannelMeasurement is an NZP CSI-RS configuration for measuring a signal channel used for the channel state report, and csi-IM-ResourcesForInterference is a CSI-IM configuration for interference measurement. In addition, nzp-CSI-RS-ResourcesForInterference is an NZP CSI-RS configuration for measuring an interference channel used for the channel state report. reportConfigType is a field for configuring a transmission type of the corresponding channel state report, and reportQuantity is a field configuring a channel state report parameter used in the corresponding channel state report, for example a CRI, an RI, a PMI, or a CQI. Frequency-related parameters used in the channel state report are included in reportFreqConfiguration, and cqi-FormatIndicator is a configuration indicating which type among a wideband CQI and a subband CQI is to be reported, and pmi-FormatIndicator is a configuration indicating which type among a wideband PMI and a subband PMI is to be reported.

Unlike LTE in which report modes have been supported for periodic and aperiodic report modes, in NR, as shown in Table 2 above, whether a PMI is a wideband PMI or a subband PMI and whether a CQI is a wideband CQI or a subband CQI are configured in a channel state report configuration. In addition, csi-ReportingBand is a configuration indicating which subband among all subbands is to be reported.

In NR, semi-persistent channel state reporting supports dynamic activation and deactivation compared to periodic channel state reporting and thus requires relatively higher UE complexity, but physical uplink control channel (PUCCH) and PUSCH resources required for channel state reporting may be efficiently used by using such a dynamic activation and deactivation operation.

In addition, periodic channel state information in NR may not support the above-mentioned subband reporting (subband CQI and subband PMI). In the case of PUCCHs used for periodic channel state reporting, an amount of transmittable reporting that may be transmitted is limited. Accordingly, in LTE, in consideration of the limited amount of transmittable reporting, a UE is allowed to autonomously select some subbands to report channel state information. However, since such a report for selective subbands contains extremely limited information, usefulness of the information is not large. Accordingly, by not supporting such a report, NR may reduce UE complexity and improve efficiency of the report.

As described above, in NR, two types of channel state reports having low spatial resolution and high spatial resolution as follows are supported. Tables 3 to 6 below show the two types of channel state reports and a reporting overhead required for each report type. Specifically, Table 3 below is a table in which a type-1 channel state report is described.

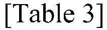

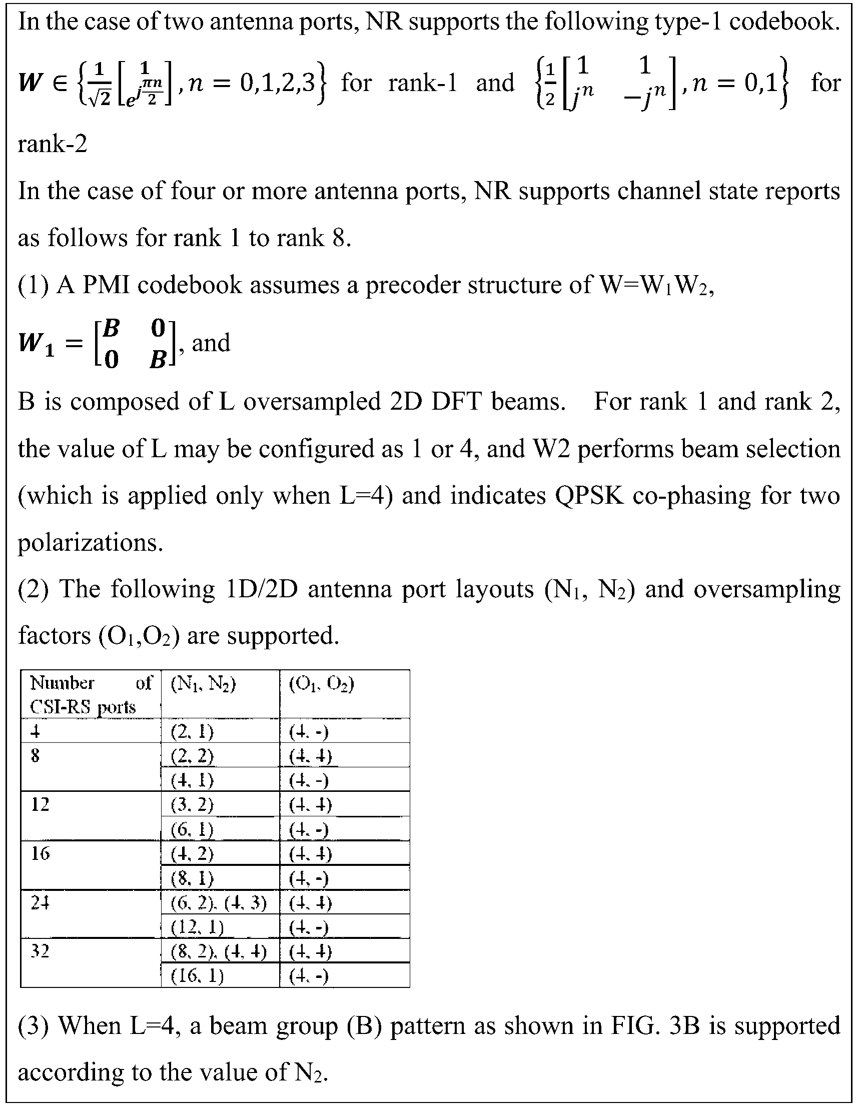

Table 4 below is a table in which a type-2 channel state report is described.

**[Table 4]**

| |
|---|
| NR supports type-2 channel state reports for rank 1 and rank 2. |
| (1) A PMI is used for spatial channel information feedback. |
| (2) A PMI codebook assumes the following precoder structure for rank 1 and rank 2. |
| For rank 1: $W = \left[\begin{matrix}{{w}^{˜}}_{0 , 0} \\ {{w}^{˜}}_{1 , 0}\end{matrix}\right] = {W}_{1} {W}_{2}$*, **W*** is normalized to 1. |
| For rank 2: $W = \left[\begin{matrix}{{w}^{˜}}_{0 , 0} & {{w}^{˜}}_{0 , 1} \\ {{w}^{˜}}_{1 , 0} & {{w}^{˜}}_{1 , 1}\end{matrix}\right] = {W}_{1} {W}_{2}$*,* columns of ***W*** are normalized to $\frac{1}{\sqrt{2}}$ (3) ${{w}^{˜}}_{r , l} = {\sum }_{i = 0}^{L - 1} {b}_{{{k}_{1}}^{\left(i\right)} {{k}_{2}}^{\left(i\right)}} ⋅ {p}_{r , l , i}^{\left(WB\right)} ⋅ {p}_{r , l , i}^{\left(SB\right)} ⋅ {c}_{r , l , i}$ (weighted combination of L beams) |
| The value of L may be configured as one of 2, 3, or 4, *b*_{*k*₁,*k*₂} is an oversampled 2D DFT beam, r denotes polarization as 0 or 1, and l denotes a layer as 0 or 1. ${p}_{r , l , i}^{\left(WB\right)}$ |
| is a wideband (WB) beam amplitude scaling factor for beam i, polarization r, and layer 1. ${p}_{r , l , i}^{\left(SB\right)}$ |
| is a subband (SB) beam amplitude scaling factor for beam i, polarization r, and layer l. |
| *c_{r,l,i}* is a beam combining coefficient (phase) for beam i, polarization r, and layer 1, and is represented by 2 bits for QPSK and 3 bits for 8PSK. |
| An amplitude scaling mode may be configured as a combination of WB and SB (with non-uniform bit allocation) or as WB only. |

In Table 5 below, a reporting overhead for a type-1 channel state report is described.

**[Table 5]**

| Number of CSI-RS ports | (*N*₁,*N*₂) | (*o*₁,*o*₂) | i1 Payload (L=1) | i1 Payload (L=4) | i2 payload |
|---|---|---|---|---|---|
| 4 | (2,1) | (4,-) | 3 bits | 2 bits | |
| 8 | (2,2) | (4,4) | 6 bits | 4 bits | |
| | (4,1) | (4,-) | 4 bits | 3 bits | |
| 12 | (3,2) | (4,4) | 7 bits | 5 bits | For rankl, 2 bits for L=1, 4 bits for L=4 |
| | (6,1) | (4,-) | 4 bits | 3 bits | |
| 16 | (4,2) | (4,4) | 7 bits | 5 bits | For rank2, Additional 2 bits for i1, 1 bits for L=1, 3 bits for L=4 |
| | (8,1) | (4,-) | 5 bits | 4 bits | |
| 24 | (6,2), (4,3) | (4,4) | 8 bits | 6 bits | |
| | (12,1) | (4,-) | 6 bits | 5 bits | |
| 32 | (8,2), (4,4) | (4,4) | 8 bits | 6 bits | |
| | (16,1) | (4,-) | 6 bits | 5 bits | |

In Table 6 below, a reporting overhead for a type-2 channel state report is described. This particularly describes an example in the case of a combination of WB and SB sizes, in which (N₁, N₂) = (4,4), Z=3(8PSK), the number of leading coefficients K is 4, 4, and 6 when L=2, 3, and 4, respectively.

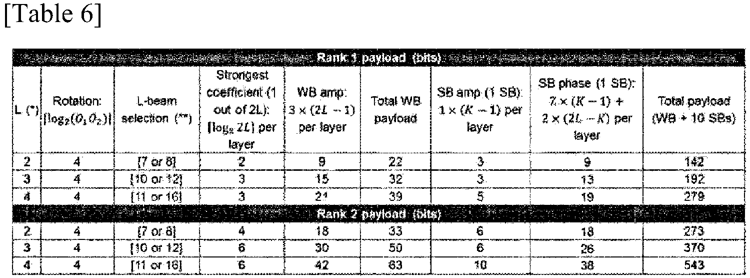

As described above, a type-1 channel state report may report a channel state to a base station through an RI, PMI, CQI, CRI, etc., based on a codebook as in conventional LTE. In contrast, a type-2 report provides a higher level of resolution through additional PMI reporting overhead while using indirect CSI similar to a type-1 report, and such PMI reporting is generated through a linear combination obtained by multiplying phases and amplitudes to up to four orthogonal beams and summing the orthogonal beams. A UE may report an eigenvector of a direct channel measured by the UE using the linear combination.

As mentioned above, a type-2 channel state report requires a high reporting overhead, and therefore the report may not be suitable for periodic channel state reporting, in which the number of reportable bits is large. In contrast, in the case of aperiodic channel state reporting, a corresponding channel state report is supported through a PUSCH capable of supporting a large reporting overhead, and thus the type-2 report requiring such a high reporting overhead may be supported only in the aperiodic channel state reporting.

In addition, semi-persistent channel state reporting may support type-2 CSI. In this case, since the amount of channel state reporting that is supportable in a short PUCCH is small, the type-2 CSI may be transmitted using a long PUCCH, and considering the characteristics of PUCCHs, only a wideband component of the CSI may be reported.

In addition, in NR, in the case of periodic channel state reporting, the reporting is performed using an offset and a period configured through higher layer signaling. In the case of semi-persistent channel state reporting, when a PUCCH is used, the reporting is performed using an offset and a period configured through higher layer signaling, and when the semi-persistent channel state reporting is based on a PUSCH, the reporting is performed at a particular time point after a UE receives an activation message by using downlink control information (DCI).

In the case of aperiodic channel state reporting, the reporting is triggered based on a channel state report configuration in a channel measurement configuration.

In NR, the base station may have a channel state information (CSI) framework for indicating a UE's CSI measurement and reporting. The NR's CSI framework may be configured by at least two elements including a resource setting and a report setting, and the report setting may refer to at least one ID of the resource setting, thereby having a mutually connected relationship.

According to an embodiment of the disclosure, the resource setting may include information related to a reference signal (RS) for a UE to measure channel state information. The base station may configure at least one resource setting for the UE. For example, the base station and the UE may exchange signaling information as in Table 7 in order to transfer information regarding the resource setting.

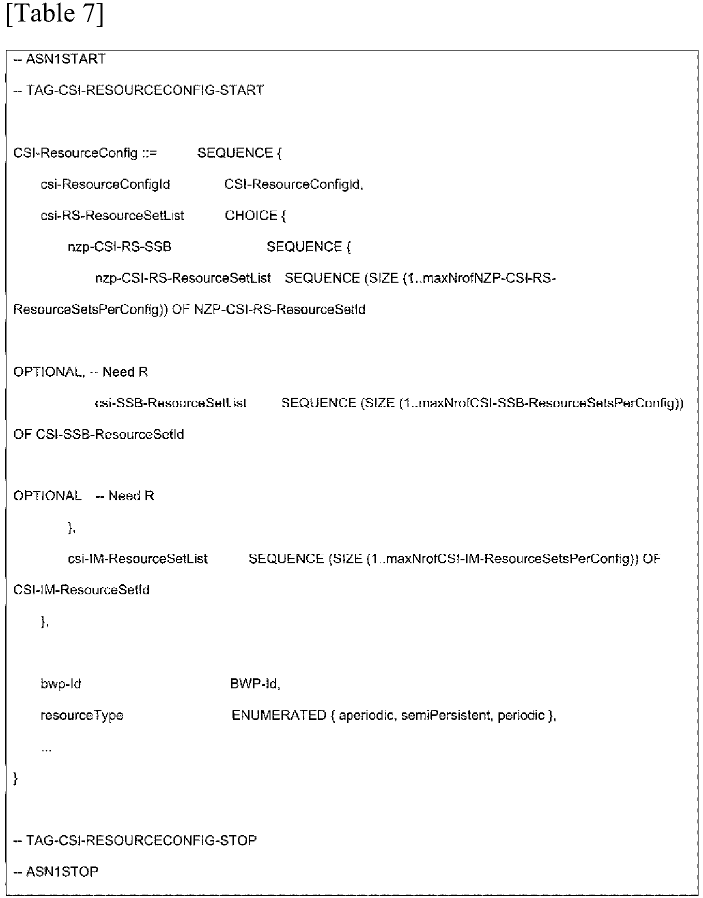

In Table 7, signal information CSI-ResourceConfig may include information regarding each resource setting. According to the signaling information in Table 4, each resource setting may include a resource setting index (csi-ResourceConfigId), a BWP index (bwp-ID), a time domain transmission configuration (resourceType) of a resource, or a resource set list (csi-RS-ResourceSetList) including at least one resource set. The time domain transmission configuration of a resource may be configured as at least one of aperiodic transmission, semi-persistent transmission, or periodic transmission. A resource set list may be a set including resource sets for channel measurement or a set including resource sets for interference measurement. In case that the resource set list is a set including resource sets for channel measurement, each resource set may include at least one resource, and the at least one resource may be an index of a CSI reference signal (CSI-RS) resource or a synchronization/broadcast channel block (SS/PBCH block (SSB)). In case that the resource set list is a set including resource sets for interference measurement, each resource set may include at least one CSI interference measurement (CSI-IM) resource.

For example, in case that a resource set includes a CSI-RS, the base station and the UE may exchange signaling information as in Table 8 to transfer information regarding the resource set.

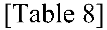

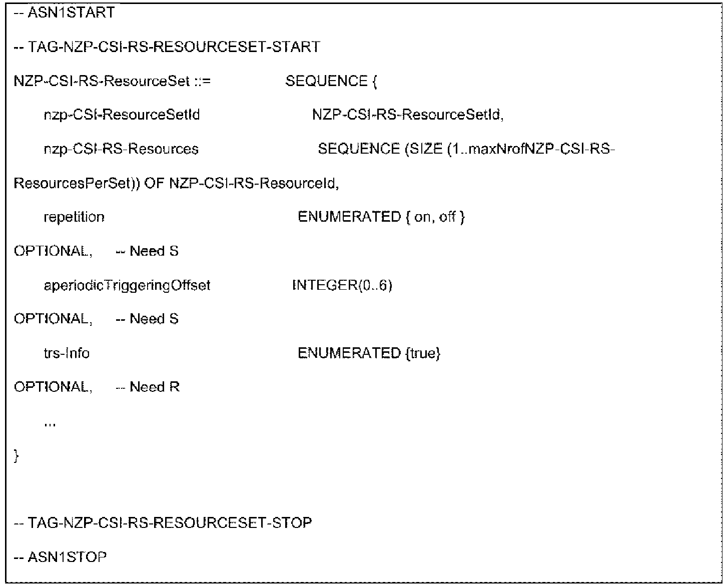

In Table 8, signaling information NZP-CSI-RS-ResourceSet may include information regarding each resource set. According to the signaling information, each resource set may include at least information regarding a resource set index (nzp-CSI-ResourceSetId) or an index set (nzp-CSI-RS-Resources) of the CSI-RS included therein. In addition, each resource set may include a part of information (repetition) regarding the spatial domain transmission filter of the CSI-RS resource included therein, or whether the CSI-RS resource included therein is used for tracking (trs-Info).

The CSI-RS may be the most representative reference signal included in a resource set. The base station and the UE may exchange signaling information as in Table 9 in order to transfer information regarding a CSI-RS resource.

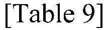

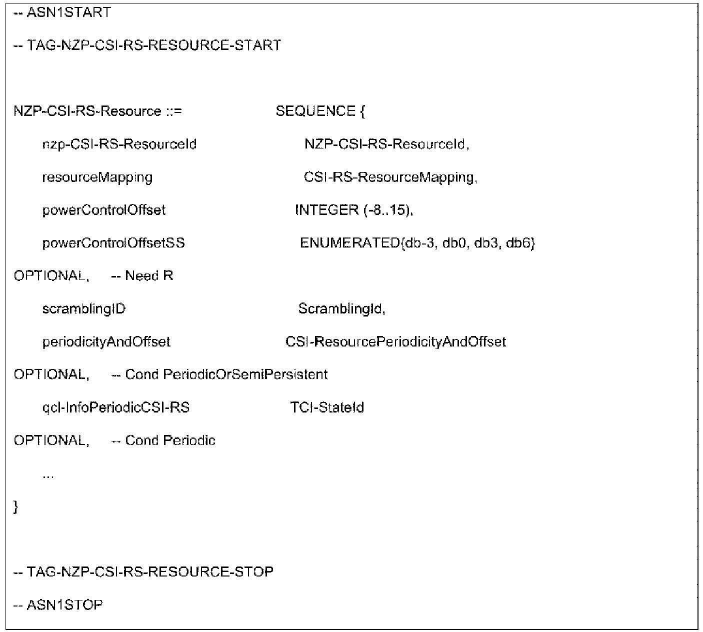

In Table 9, signaling information NZP-CSI-RS-Resource includes information regarding each CSI-RS. The information included in the signaling information NZP-CSI-RS-Resource may have the following meanings.
- nzp-CSI-RS-ResourceId: A CSI-RS resource index
- resourceMapping: Resource mapping information of a CSI-RS resource
- powerControlOffset: A ratio between PDSCH energy per RE (EPRE) and CSI-RS EPRE
- powerControlOffsetSS: A ratio between SS/PBCH block EPRE and CSI-RS EPRE
- scramblingID: A scrambling index of a CSI-RS sequence
- periodicityAndOffset: A transmission periodicity and a slot offset of a CSI-RS resource
- qcl-InfoPeriodicCSI-RS: TCI-state information in case that a corresponding CSI-RS is a periodic CSI-RS

The resourceMapping included in signaling information NZP-CSI-RS-Resource may indicate resource mapping information of a CSI-RS resource, and may include a frequency resource's resource element (RE) mapping, the number of ports, symbol mapping, a code domain multiplex (CDM) type, a frequency resource density, or frequency band mapping information.

According to an embodiment of the disclosure, a report setting may refer to one or more ID of resource setting, thereby having a mutually connected relationship, and the resource setting(s) having a connection relation with the report setting may provide configuration information including information on a reference signal for channel information measurement. In case that the resource setting (s) having a connection relation with the report setting are used for channel information measurement, the measured channel information may be used for channel information reporting according to the reporting method configured in the report setting having the connection relation.

According to an embodiment of the disclosure, the report setting may include configuration information related to a CSI reporting method. For example, the base station and the UE may exchange signaling information as in Table 10 in order to transfer information regarding the report setting.

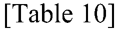

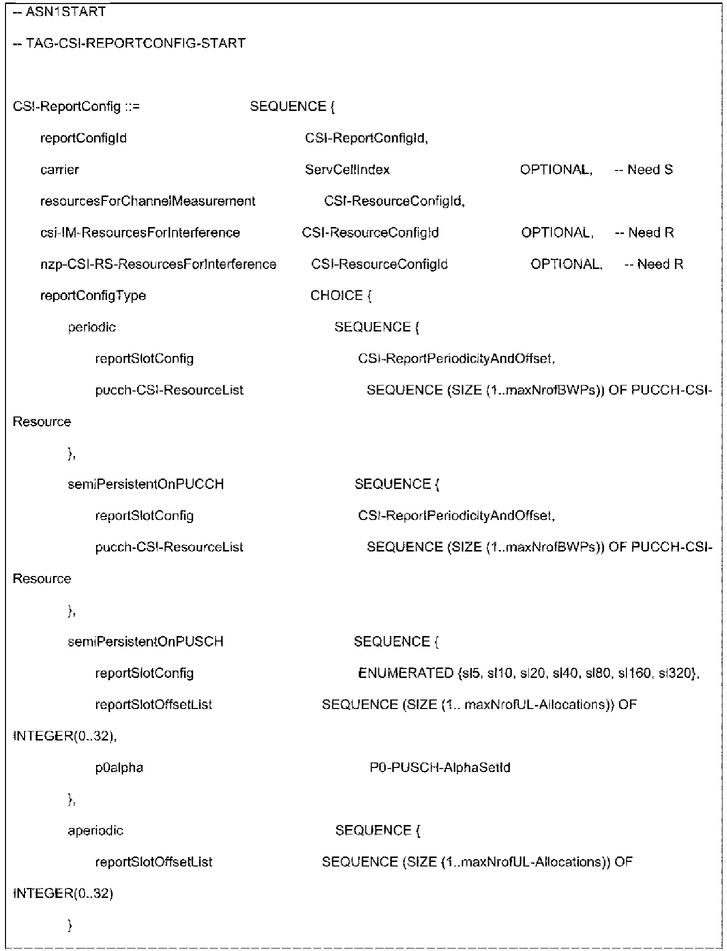

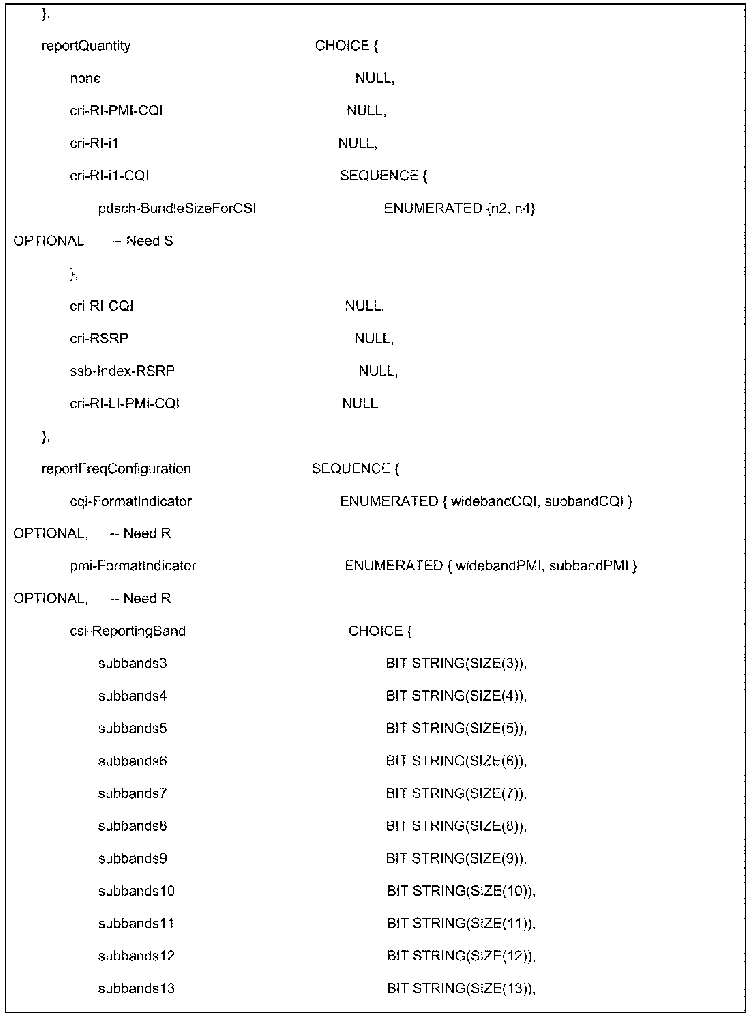

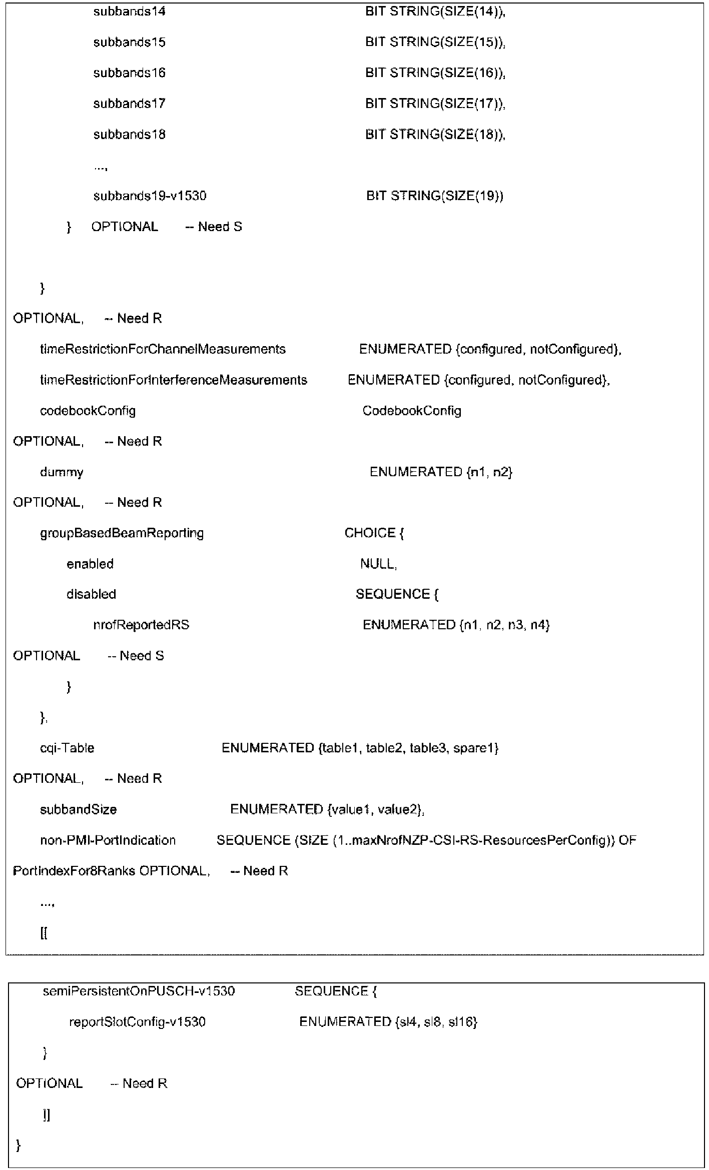

In Table 10, signal information CSI-ReportConfig includes information regarding each report setting. The information included in the signaling information CSI-ReportConfig may have the following meaning.
- reportConfigId: A report setting index
- carrier: A serving cell index
- resourcesForChannelMeasurement: A resource setting index for channel measurement having a connection relationship with the report setting
- csi-IM-ResourcesForInterference: A resource setting index having a CSI-IM resource for interference measurement having a connection relationship with the report setting
- nzp-CSI-RS-ResourcesForInterference: A resource setting index having a CSI-RS resource for interference measurement having a connection relationship with the report setting
- reportConfigType: indicates channel reporting's time domain transmission configuration and transmission channel, and may have an aperiodic transmission or semi-persistent physical uplink control channel (PUCCH) transmission or semi-persistent PUSCH transmission or periodic transmission configuration
- reportQuantity: indicates the type of channel information to be reported, and may have the type of channel information ("cri-RI-PMI-CQI", "cri-RI-i1", "cri-RI-i1-CQI", "cri-RI-CQI", "cri-RSRP", "ssb-Index-RSRP", "cri-RI-LI-PMI-CQI") in case that no channel report is transmitted ("none") and in case that a channel report is transmitted. Elements included in the type of channel information refer to a channel quality indicator (CQI), a precoding matrix indicator (PMI), a CSI-RS resource indicator (CRI), an SS/PBCH block resource indicator (SSBRI), a layer indicator (LI), a rank indicator (RI), and/or reference signal received power (L1-RSRP).
- reportFreqConfiguration: indicates whether the reported channel information includes only information regarding the entire bandwidth (wideband) or includes information regarding each subband, and in case of including information regarding each subband is included, the channel information may have configuration information regarding the included subband.
- timeRestrictionForChannelMeasurements: indicates whether there is a time domain restriction regarding a reference signal for channel measurement among reference signals to which the reported channel information refers
- timeRestrictionForInterferenceMeasurements: indicates whether there is a time domain restriction regarding a reference signal for interference measurement among reference signals to which the reported channel information refers
- codebookConfig: Codebook information to which the reported channel information refers
- groupBasedBeamReporting: indicates whether or not to beam-group the channel report
- cqi-Table: A CQI table index to which the reported channel information refers
- subbandSize: An index indicating the subband size of channel information
- non-PMI-PortIndication: Port mapping information to be referenced when reporting non-PMI channel information

In case that the base station indicates channel information reporting through upper layer signaling or L1 signaling, the UE may perform channel information reporting by referring to the above-described configuration information included in the indicated report setting.

The base station may instruct the UE to report channel state information (CSI) through upper layer signaling including radio resource control (RRC) signaling or medium access control (MAC) control element (CE) signaling, or L1 signaling (for example, common DCI, group-common DCI, or UE-specific DCI).

For example, the base station may indicate aperiodic channel information reporting (CSI report) to the UE through upper layer signaling or DCI using DCI format 0_1. The base station may configure a parameter for an aperiodic CSI report of the UE, or multiple CSI report trigger states including a parameter for a CSI report, through upper layer signaling. The parameter for a CSI report or the CSI report trigger states may include at least one of a slot interval between a PDCCH including DCI and a PUSCH including a CSI report, a set including possible slot intervals, a reference signal ID for channel state measurement, or the type of channel information included therein. If the base station indicates some of the multiple CSI report trigger states to the UE through DCI, the UE may report channel information according to the CSI report configuration of the report setting configured for the indicated CSI report trigger states. The channel information reporting may be performed through a PUSCH scheduled by DCI format 0_1. Time domain resource allocation of a PUSCH including the UE's CSI report may be performed by indicating at least one of the slot interval from the PDCCH indicated through DCI, or the starting symbol within the slot for time domain resource allocation of the PUSCH, and the symbol length. For example, the position of a slot in which a PUSCH including the UE's CSI report is transmitted may be indicated through the slot interval from the PDCCH indicated through DCI, and the starting symbol within the slot and the symbol length may be indicated through the above-described DCI's time domain resource assignment field.

For example, the base station may indicate a semi-persistent CSI report transmitted through a PUSCH to the UE through DCI using DCI format 0_1. The base station may activate or deactivate a semi-persistent CSI report transmitted through a PUSCH through DCI scrambled by an SP-CSI-RNTI. If a semi-persistent CSI report is activated, the UE may periodically report channel information according to the configured slot interval. If the semi-persistent CSI report is deactivated, the UE may stop the periodic channel information reporting which has been activated. The base station may configure, through upper layer signaling, a parameter for the UE's semi-persistent CSI report, or multiple CSI report trigger states including the parameter for the semi-persistent CSI report. The parameter for a CSI report or the CSI report trigger states may include at least one of a set including the slot interval between a PDCCH including DCI indicating a CSI report and a PUSCH including the CSI report or possible slot intervals, the slot interval between a slot in which upper layer signaling indicating the CSI report is activated and the PUSCH including the CSI report, the slot interval periodicity of the CSI report, or the type of channel information included therein. If the base station activates, for the UE, some of multiple CSI report trigger states or some of multiple report settings through upper layer signaling or DCI, the UE may report channel information according to the CSI report configuration configured in the report setting included in the indicated CSI report trigger state or the activated report setting. The channel information reporting may be performed through a PUSCH semi-persistently scheduled by DCI format 0_1 scrambled by an SP-CSI-RNTI. Time domain resource allocation of a PUSCH including the UE's CSI report may be performed by indicating at least one of the slot interval periodicity of the CSI report, the slot interval from the slot in which the upper layer signaling is activated, or the slot interval from the PDCCH indicated through DCI, or the starting symbol within the slot for time domain resource allocation of the PUSCH, and the symbol length. For example, the position of a slot in which a PUSCH including the UE's CSI report is transmitted may be indicated through the slot interval from the PDCCH indicated through DCI, and the starting symbol within the slot and the symbol length may be indicated through the time domain resource assignment field of DCI format 0_1 described above.

For example, the base station may indicate, to the UE, a semi-persistent CSI report transmitted through a PUCCH through upper layer signaling, such as a MAC-CE. The base station may activate or deactivate a semi-persistent CSI report transmitted through the PUCCH through MAC-CE signaling. If a semi-persistent CSI report is activated, the UE may periodically report channel information according to the configured slot interval. If the semi-persistent CSI report is deactivated, the UE may stop the periodic channel information reporting which has been activated. The base station may configure parameters for the UE's semi-persistent CSI report through upper layer signaling. Parameters for the CSI report may include at least one of a PUCCH resource in which the CSI report is transmitted, the slot interval periodicity of the CSI report, or the type of channel information included therein. The UE may transmit the CSI report through a PUCCH. Alternatively, in case that the PUCCH for the CSI report overlaps with the PUSCH, the UE may transmit the CSI report through the PUSCH. The position of the PUCCH transmission slot including a CSI report may be indicated through the slot interval periodicity of the CSI report configured through upper layer signaling, and/or the slot interval between the slot in which upper layer signaling is activated and the PUCCH including the CSI report, and the starting symbol inside the slot and the symbol length may be indicated through the starting symbol to which a PUCCH resource configured through upper layer signaling is assigned, and the symbol length.

For example, the base station may indicate a periodic CSI report to the UE through upper layer signaling. The base station may activate or deactivate a periodic CSI report through upper layer signaling including RRC signaling. If a periodic CSI report is activated, the UE may periodically report channel information according to the configured slot interval. If the periodic CSI report is deactivated, the UE may stop the periodic channel information reporting that has been activated. The base station may configure a report setting including parameters for the UE's periodic CSI report through upper layer signaling. The parameters for the CSI report may include at least one of a PUCCH resource configuration for the CSI report, the slot interval between a slot in which upper layer signaling indicating the CSI report is activated and a PUCCH including the CSI report, a slot interval periodicity of the CSI report, a reference signal ID for channel state measurement, and the type of channel information included therein. The UE may transmit the CSI report through a PUCCH. Alternatively, in case that the PUCCH for the CSI report overlaps with the PUSCH, the UE may transmit the CSI report through the PUSCH. The position of a slot in which a PUCCH including a CSI report is transmitted may be indicated through the slot interval periodicity of the CSI report configured through upper layer signaling, and/or the slot interval between the slot in which upper layer signaling is activated and the PUCCH including the CSI report, and the starting symbol within the slot and the symbol length may be indicated through the starting symbol to which a PUCCH resource configured through upper layer signaling is assigned, and the symbol length.

With respect to the aforementioned CSI report settings (CSI-ReportConfig), each report setting CSI-ReportConfig may be associated with one downlink (DL) bandwidth part identified by a higher-layer parameter bandwidth part identifier (bwp-id) given by CSI resource setting CSI-ResourceConfig associated with the corresponding report setting. As a time domain reporting operation for each report configuration CSI-ReportConfig, "aperiodic", "semi-persistent", and "periodic" schemes may be supported, and these schemes may be configured for the UE by the base station via a reportConfigType parameter configured from a higher layer. A semi-persistent CSI report method may support a "PUCCH-based semi-persistent (semi-PersistentOnPUCCH)" method and a "PUSCH-based semi-persistent (semi-PersistentOnPUSCH)" method. In the case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink (UL) bandwidth part configured for CSI report transmission. In the case of the aperiodic CSI report method, a PUSCH resource in which CSI is to be transmitted may be scheduled for the UE by the base station via L1 signaling (aforementioned DCI format 0_1).

With regard to the aforementioned CSI resource configurations (CSI-ResourceConfig), each CSI resource configuration CSI-ReportConfig may include S(≥1) CSI resource sets (e.g., given via a higher-layer parameter of csi-RS-ResourceSetList). A CSI resource set list may include a non-zero power (NZP) CSI-RS resource set and an SS/PBCH block set or may include a CSI-interference measurement (CSI-IM) resource set. Each CSI resource setting may be positioned in a downlink (DL) bandwidth part identified by higher-layer parameter bwp-id and may be connected to CSI report setting in the same downlink bandwidth part. A time domain operation of a CSI-RS resource in the CSI resource configuration may be configured to be one of "aperiodic", "periodic", or "semi-persistent" from the higher-layer parameter resourceType. With regard to the periodic or semi-persistent CSI resource configuration, the number of CSI-RS resource sets may be limited to S=1, and the configured periodicity and slot offset may be given based on a numerology of the downlink bandwidth part identified by bwp-id. One or more CSI resource settings for channel or interference measurement may be configured for the UE by the base station via higher-layer signaling, and may include, for example, the following CSI resources.
- CSI-IM resource for interference measurement
- NZP CSI-RS resource for interference measurement
- NZP CSI-RS resource for channel measurement

With regard to CSI-RS resource sets associated with a resource configuration in which the higher-layer parameter of resourceType is configured to be "aperiodic", "periodic", or "semi-persistent", a trigger state of CSI report configuration having reportType configured to be "aperiodic", and a resource configuration for channel or interference measurement on one or multiple component cells (CCs) may be configured via the higher-layer parameter of CSI-AperiodicTriggerStateList.

Aperiodic CSI reporting of the UE may be performed using a PUSCH, periodic CSI reporting may be performed using a PUCCH, and semi-persistent CSI reporting may be performed using a PUSCH when triggered or activated via DCI, and may be performed using a PUCCH after activated via a MAC control element (MAC CE). As described above, CSI resource setting may also be configured to be aperiodic, periodic, or semi-persistent. A combination of CSI reporting setting and CSI resource setting may be supported based on Table 11 below.

**[Table 11]**

| **Table 5.2.1.4-1: Triggering/Activation of CSI Reporting for the possible CSI-RS Configurations.** | | | |
|---|---|---|---|
| **CSI-RS Configuration** | **Periodic CSI Reporting** | **Semi-Persistent CSI Reporting** | **Aperiodic CSI Reporting** |
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by a "CSI request" field in DCI format 0_1 described above, which corresponds to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states which may be configured via higher-layer signaling (CSI-AperiodicTriggerStateList) may be triggered by the CSI request indicator.
- If all bits in the CSI request field are 0, this may indicate that CSI reporting is not requested.
- If the number M of configured CSI trigger states in CSI-AperiodicTriggerStateList is greater than 2NTs-1, M CSI trigger states may be mapped to 2NTs-1 trigger states according to a predefined mapping relation, and one trigger state among the 2NTs-1 trigger states may be indicated by the CSI request field.
- If the number M of configured CSI trigger states in CSI-AperiodicTriggerStateLite is less than or equal to 2NTs-1, one of the M CSI trigger states may be indicated by the CSI request field.

Table 12 below shows an example of a relationship between a CSI request indicator and a CSI trigger state that may be indicated by a corresponding indicator.

**[Table 12]**

| **CSI request field** | **CSI trigger state** | **CSI-ReportConfigId** | **CSI-ResourceConfigId** |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may measure a CSI resource in a CSI trigger state triggered via the CSI request field, and then generate CSI (including, for example, at least one of the CQI, PMI, CRI, SSBRI, LI, RI, or L1-RSRP described above) based on the measurement. The UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same.

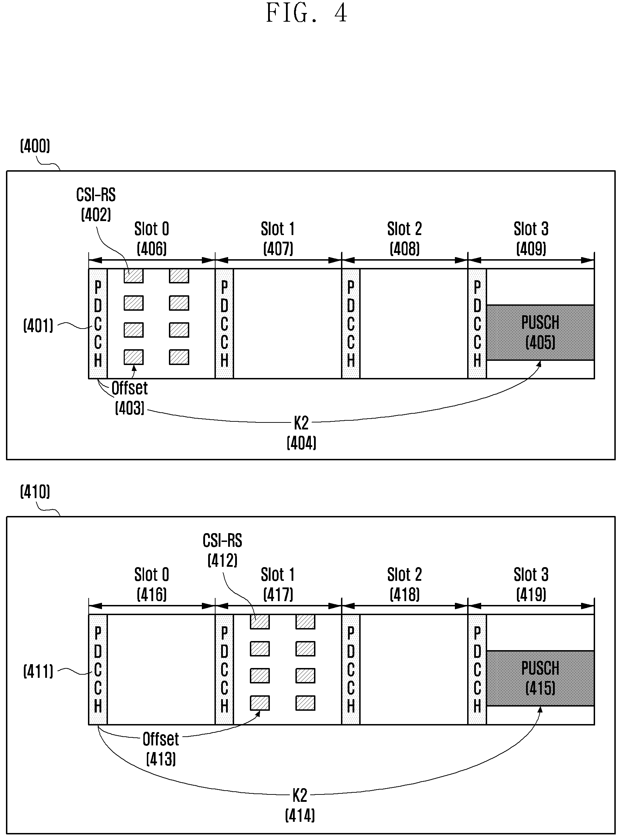

FIG. 4 illustrates an example of an aperiodic CSI reporting method to which an embodiment of the disclosure is applicable.

In an example 400 of FIG. 4, the UE may acquire DCI format 0_1 by monitoring a PDCCH 401, and may acquire scheduling information and CSI request information for a PUSCH 405 therefrom. The UE may acquire resource information of a CSI-RS 402 to be measured, from a received CSI request indicator. The UE may determine a time point at which the UE needs to measure a resource of the CSI-RS 402, based on a time point at which DCI format 0_1 is received, and a parameter for an offset (e.g., aforementioned aperiodicTriggeringOffset) in a CSI resource set configuration (e.g., an NZP CSI-RS resource set configuration (NZP-CSI-RS-ResourceSet)). More specifically, the UE may be configured with an offset value X of the parameter, aperiodicTriggeringOffset, in the NZP-CSI-RS resource set configuration from a base station via higher-layer signaling, and the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as shown in Table 13 below.

**[Table 13]**

| **aperiodicTriggeringOffset** | **Offset X** |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

An example 400 of FIG. 4 shows an example in which aforementioned offset value X is configured to be 0 (X=0). In this case, the UE may receive the CSI-RS 406 in a slot (corresponding to slot 0 402 of FIG. 4) in which DCI format 0_1 triggering aperiodic CSI reporting is received, and may report CSI information, which is measured based on the received CSI-RS, to the base station via the PUSCH 405. The UE may acquire, from DCI format 0_1, scheduling information (information corresponding to each field of DCI format 0_1 described above) on the PUSCH 405 for CSI reporting. For example, in DCI format 0_1, the UE may acquire information on a slot in which the PUSCH 405 is to be transmitted, from time domain resource allocation information for the PUSCH 405 described above. In the example 400 of FIG. 4, the UE acquires 3 as a K2 value corresponding to a slot offset value for PDCCH-to-PUSCH, and accordingly, the PUSCH 405 may be transmitted in slot 3 401, which is spaced 3 slots apart from slot 0 406, i.e., a time point at which the PDCCH 409 has been received.

In an example 410 of FIG. 4, the UE may acquire DCI format 0_1 by monitoring a PDCCH 411, and may acquire scheduling information and CSI request information for a PUSCH 415 therefrom. The UE may acquire resource information of a CSI-RS 412 to be measured, from a received CSI request indicator. The example 410 of FIG. 4 shows an example in which the offset value X for CSI-RS described above is configured to be 1 (X=1). In this case, the UE may receive the CSI-RS 416 in a slot (corresponding to slot 0 412 of FIG. 4) in which DCI format 0_1 triggering aperiodic CSI reporting is received, and may report CSI information, which is measured based on the received CSI-RS, to the base station via the PUSCH 415.

The aperiodic CSI report may include at least one of or both CSI part 1 and CSI part 2, and when the aperiodic CSI report is transmitted via the PUSCH, the aperiodic CSI report may be multiplexed on a transport block. After a CRC is inserted into an input bit of aperiodic CSI for multiplexing, encoding and rate matching may be performed, and then transmission may be performed by mapping to resource elements within the PUSCH in a specific pattern. The CRC insertion may be omitted depending on a coding method or a length of the input bit.

Hereinafter, embodiments of the disclosure will be described in detail in conjunction with the accompanying drawings. The contents of the disclosure may be applied to frequency division duplex (FDD, time division duplex (TDD), and/or cross division duplex (XDD) (and/or subband non-overlapping full duplex (SBFD)) systems.

In the following description, a base station is an entity that allocates resources to terminals, and may be at least one of a gNode B, a gNB, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing a communication function.

In the following description of embodiments of the disclosure, the 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determination by those skilled in the art, the embodiments of the disclosure may also be applied to other communication systems through some modifications without departing from the scope of the disclosure.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on content throughout the specification.

In the following description of the disclosure, higher layer signaling may refer to signaling corresponding to at least one signaling among the following signaling, or a combination of one or more thereof.
- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.
- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

An embodiment of the disclosure may be applied to a periodic/semi-static/aperiodic CSI-RS.

Hereinafter, in the disclosure, the above-described examples may described through a number of embodiments, but the above-described examples are not independent of each other, and one or more embodiments may be applied simultaneously or in combination.

In the description of an embodiment of the disclosure, "a/b" may indicate at least one of a or b.

In the description of an embodiment of the disclosure, the term "less than" (or less than a specific value, etc.) may be replaced with "less than or equal to", and the term "less than or equal to" may be replaced with "less than".

In the description of an embodiment of the disclosure, the term "exceed" (or greater than a specific value, etc.) may be replaced with "greater than or equal to", and "greater than or equal to" may be replaced with "exceed".

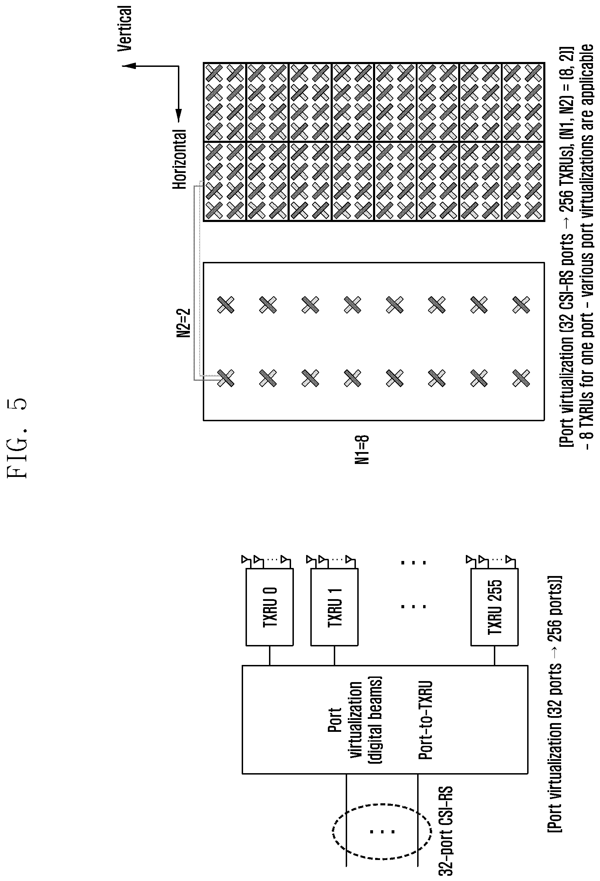

FIG. 5 is a diagram illustrating an example of port virtualization to which an embodiment of the disclosure is applicable.

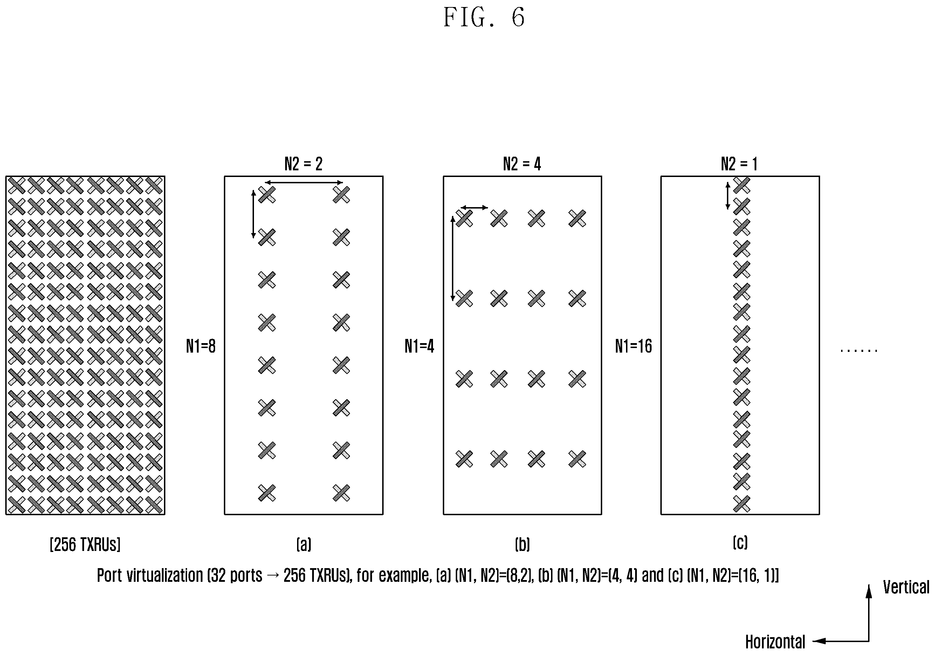

FIG. 6 is a diagram illustrating an example of port virtualization to which an embodiment of the disclosure is applicable.

Referring to FIG. 5, when the number of CSI-RS ports operated or operable by a base station is different from the number of digital ports determined by (physical) transmitter receiver units (TXRUs), the CSI-RS ports and the TXRUs (or digital ports) may be mapped. A mapping relationship between a CSI-RS port and a TXRU (or a digital port) may be determined, and the CSI-RS port and the TXRU (or the digital port) may be mapped according to the mapping relationship. Port virtualization may refer to mapping a CSI-RS port and a TXRU (or a digital port). For example, the base station may map a CSI-RS port to a TXRU (or a digital port). According to port virtualization, TXRUs (or digital ports) of the base station may be mapped to a single port. That is, according to port virtualization, TXRUs (or digital ports) may be grouped into a single port.

Various methods may exist for port virtualization from x CSI-RS ports to y TXRUs (or digital ports), even for the same x and y ports. For example, in the case of a base station having a cross-polarized twodimensional uniform linear array antenna structure, different port virtualization may be applied by changing a combination of antenna port layouts (N1, N2), and/or different port virtualization may be applied by using different weight vectors/matrices for a given antenna port layout (N1, N2).

For example, the number of TXRUs (or digital ports) of a base station may be 256. In this case, in port virtualization, 16, 32, 64, 128, or 256 CSI-RS ports may be used. For example, when the number of CSI-RS ports operated or operable by the base station is 32 (32-port CSI-RS), eight TXRUs (or digital ports) may be mapped to one port. For example, according to an antenna port layout (N1, N2) = (8, 2), mapping of 32 CSI-RS ports to 256 TXRUs (or digital ports) may be performed.

The antenna port layout for port virtualization is not limited to a specific value, and various antenna port layouts and various port virtualizations according thereto may be applied. Referring to FIG. 6, in mapping (or port virtualization) of 32 CSI-RS ports to 256 TXRUs (or digital ports), (a) an antenna port layout (N1, N2) = (8, 2), (b) an antenna port layout (N1, N2) = (4, 4), and (c) an antenna port layout (N1, N2) = (16, 1) may be applied, but the disclosure is not limited thereto.

A base station in a communication system (hereinafter, an X-MIMO system) to which extreme multi input multi output (X-MIMO) is applied may support 256 or more TXRUs (or digital ports), and more than 32 CSI ports (e.g., 64 or more) may be supported. Accordingly, the number of combinations of antenna port layouts (N1, N2) available in port virtualization may increase. Therefore, the number of possible port virtualization cases may also increase.

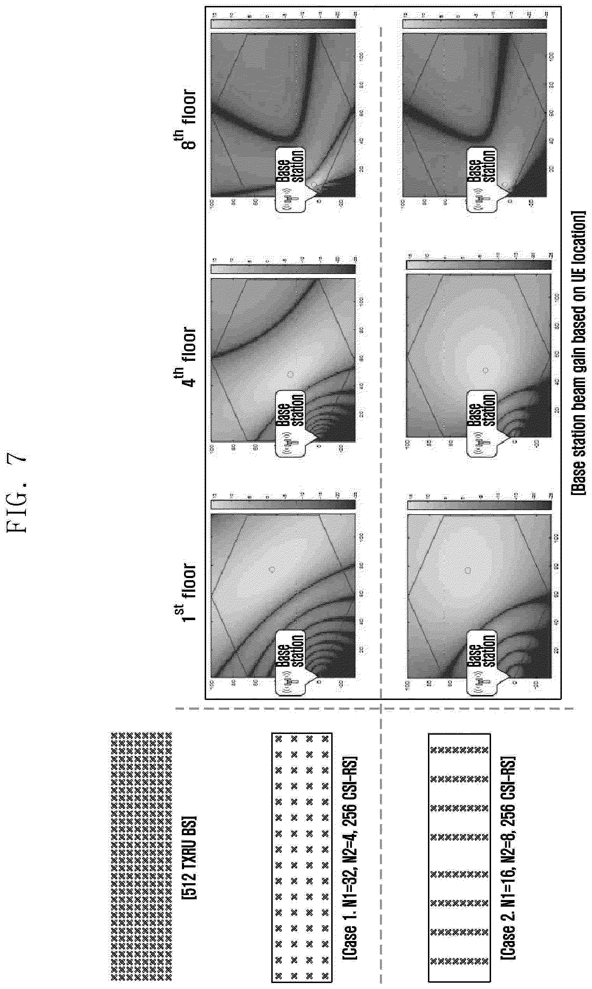

FIG. 7 is a diagram illustrating an example of port virtualization to which an embodiment of the disclosure is applicable. Specifically, FIG. 7 shows an example in which port virtualization is applied in an X-MIMO system when the number of CSI-RS ports operated or operable by a base station is 256 and the number of TXRUs (or digital ports) of the base station is 512.

Referring to FIG. 7, in case 1, port virtualization is applied according to an antenna port layout (N1, N2) = (32, 4), and in case 2, port virtualization is applied according to an antenna port layout (N1, N2) = (16, 8). Referring to measurement data of base station beam gain at a particular UE location (e.g., a first floor, a fourth floor, or an eighth floor), it may be seen that the base station beam gain appears differently according to a port virtualization method (case 1 or case 2) even at the same UE location.

That is, even when the number of CSI-RS ports is the same, it may be seen that a channel environment (or a UE favorable channel) is affected by port virtualization (e.g., an antenna port layout). In the case of an X-MIMO system, since the number of possible port virtualization cases increases, the number of channel environments corresponding to the port virtualization may also increase accordingly.

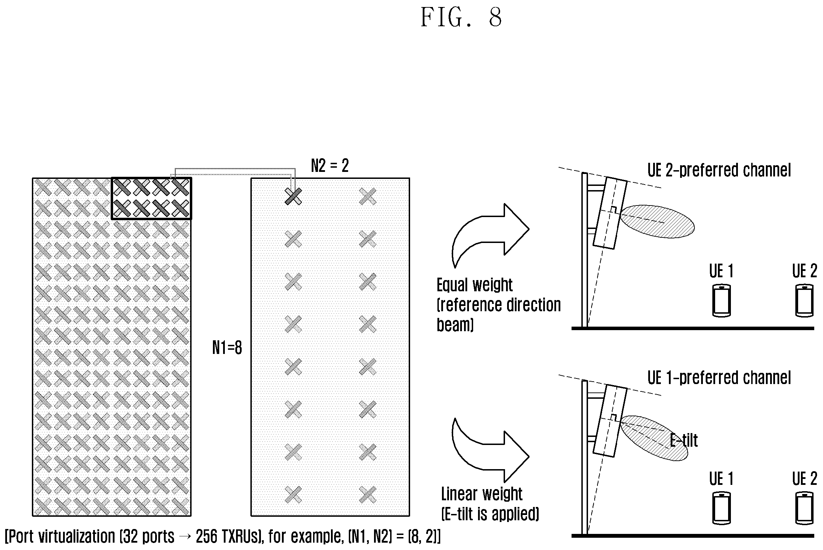

FIG. 8 is a diagram illustrating an example of port virtualization to which an embodiment of the disclosure is applicable. Specifically, FIG. 8 illustrates an example in which, when port virtualization is applied, different weight vectors/matrices are applied so that a beam pattern/beam patter shape of a base station becomes different.

Referring to FIG. 8, an example in which port virtualization is applied to 32 CSI-RS ports and 256 TXRUs according to an antenna port layout (N1, N2) = (8, 2) is illustrated. For example, in the case of port virtualization to which an equal weight is applied, a beam may be generated/formed in a reference (boresight) direction, which may be preferred for, for example, UE 2. That is, in the case of port virtualization to which the equal weight is applied, a channel favorable to UE 2 may be formed. As another example, in the case of port virtualization to which a linear weight is applied, a beam tilted in a particular direction with respect to the reference direction may be generated/formed (electrical tilting, E-tilting), which may be preferred for, for example, UE 1. That is, in the case of port virtualization to which the linear weight is applied, a channel favorable to UE 1 may be formed. According to a method of applying the linear weight, an angle of E-tilting may be changed.

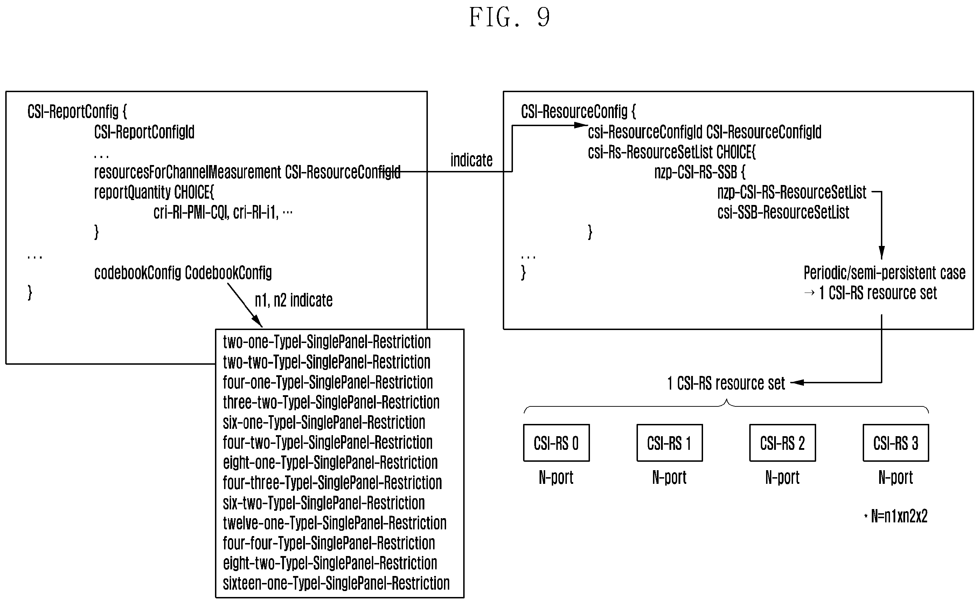

FIG. 9 is a diagram illustrating an example of a CSI report configuration and a CSI resource configuration to which an embodiment of the disclosure is applicable. A CSI report configuration and a CSI resource configuration may be transmitted and received through higher layer signaling (e.g., RRC signaling).

Referring to FIG. 9, a base station may transmit/configure a CSI report configuration (CSI-ReportConfig) to/for a UE through higher layer signaling (e.g., RRC signaling). The CSI report configuration may indicate CSI-ResourceConfig, CodebookConfig, and the like.

The CSI-ResourceConfig may include pieces of information required for CSI reporting of the UE. For example, reportQuantity indicating which CSI parameter (e.g., PMI or L1-RSRP) needs to be reported and reportConfigType indicating when CSI needs to be reported may be included.

The CSI-ResourceConfig may include overall information on a CSI-RS resource. For example, the number of CSI-RS ports, a location of the CSI-RS resource, and the like may be included.

The CodebookConfig may include information related to a codebook operated by the base station. In addition, an antenna port layout (N₁, N₂) may be indicated by the CodebookConfig.

One CSI-ReportConfig may be mapped to one CSI-ResourceConfig and one CodebookConfig. The UE may report CSI information on a CSI-RS resource configured/indicated by CSI-ResourceConfig mapped to the CSI-ReportConfig assigned to the UE. One CSI-ReportConfigId may indicate one csi-ResourceConfigId and one CodebookConfig.

For example, nzp-CSI-RS-ResourceSetList may be indicated by csi-RS-ResourceSetList corresponding to csi-ResourceConfigId. One CSI-RS resource set corresponding to nzp-CSI-RS-ResourceSetList may be configured/indicated periodically/ semi-persistently (or aperiodically). One CSI-RS resource set may include multiple CSI-RS resources (e.g., CSI-RSs 0, 1, 2, and 3), and each CSI-RS resource may correspond to N ports (N = N₁* N₂ *2).

Multiple CSI-ReportConfigs may be configured/assigned for one UE. When multiple CSI-ReportConfigs are configured/assigned, the UE may report channel measurement for CSI-RS resources indicated by the multiple CSI-ReportConfigs, respectively.

For more details of each configuration parameter, reference may be made to the above description related to a CSI configuration.

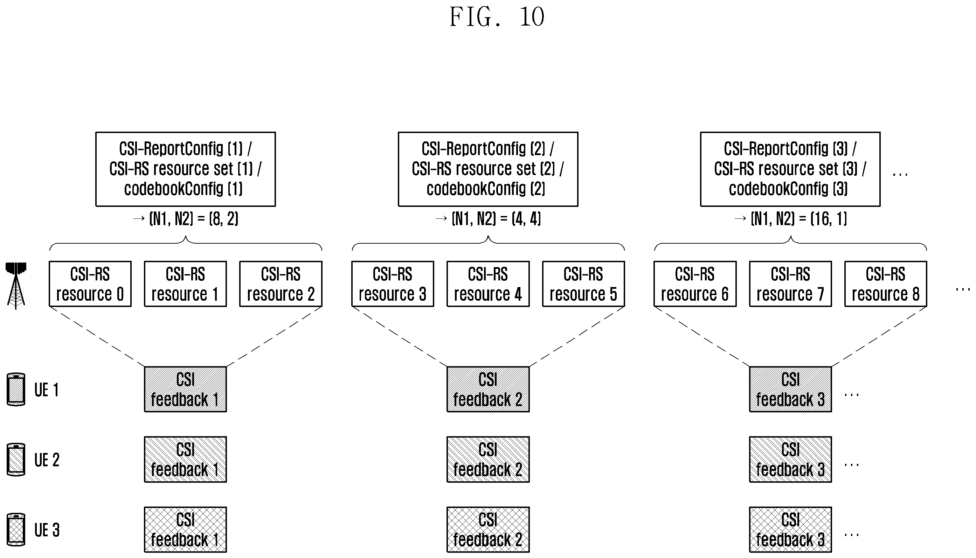

FIG. 10 is a diagram illustrating an example of a CSI feedback method to which an embodiment of the disclosure is applicable.

In a 6G system, X-MIMO may be applied, and accordingly more TXRUs (or digital ports) may be operated compared to an existing NR system. For example, 256 or more TXRUs (or digital ports) may be used.

When the number of CSI-RS ports usable by a base station is less than/equal to the number of TXRUs (or digital ports), the base station may transmit various CSI-RSs to a UE through port virtualization. As described above, a beam shape of the base station varies according to a port virtualization method, and thus a channel characteristic/channel shape between the base station and the UE may vary. A channel characteristic/shape preferred by the UE may vary, for example, according to a location of the UE.

Referring to FIG. 10, an example in which a base station operating 32 CSI-RS ports in an X-MIMO system including 256 TXRUs (or digital ports) uses a method according to an NR standard to transmit CSI-RSs to a UE through various port virtualization methods is illustrated.

According to the NR standard, CodebookConfig may indicate one antenna port layout (N₁, N₂), and one CSI-ReportConfig may indicate one CSI-ResourceConfig and one CodebookConfig. Accordingly, in order to transmit various CSI-RSs to the UE through various port virtualizations or configure various CSI-RS resources, multiple CodebookConfigs and multiple CSI-ReportConfigs corresponding/mapped thereto need to be configured/operated.

FIG. 10 illustrates an example in which antenna port layouts (N1, N2) are operated as (8, 2), (4, 4), and (16, 1).

The antenna port layout (N₁, N₂) = (8, 2) may correspond to CSI-ReportConfig (1), CSI-RS Resource Set (1), CodebookConfig (1), and CSI-RS resources 0, 1, and 2.

The antenna port layout (N₁, N₂) = (4, 4) may correspond to CSI-ReportConfig (2), CSI-RS Resource Set (2), CodebookConfig (2), and CSI-RS resources 3, 4, and 5.

The antenna port layout (N₁, N₂) = (16, 1) may correspond to CSI-ReportConfig (3), CSI-RS Resource Set (3), CodebookConfig (3), and CSI-RS resources 6, 7, and 8.

The UE may perform CSI feedback in units of CSI-ReportConfig. That is, each of UE 1, UE 2, and UE 3 may perform CSI feedback 1 for CSI-ReportConfig (1), CSI feedback 2 for CSI-ReportConfig (2), and CSI feedback 3 for CSI-ReportConfig (3). However, this may cause a problem in that CSI feedback overhead increases from a perspective of the UE. In particular, when CSI port virtualization is operated in an X-MIMO system, more various numbers or types of port virtualization cases are possible, and therefore CSI feedback overhead may further increase.

An embodiment of the disclosure may provide a method and an apparatus for transmitting and receiving a channel state information report in a communication system. According to an embodiment of the disclosure, CSI feedback overhead of a UE may be reduced.

In the description of an embodiment of the disclosure, the embodiment of the disclosure is described by using an X-MIMO system as an example, but the disclosure is not limited thereto and may be generally applied to another communication system. For example, the disclosure may be applied to a communication system in which multiple TXRUs (or digital ports) are operated and CSI-RS transmission and reception and corresponding CSI feedback are operated through port virtualization.

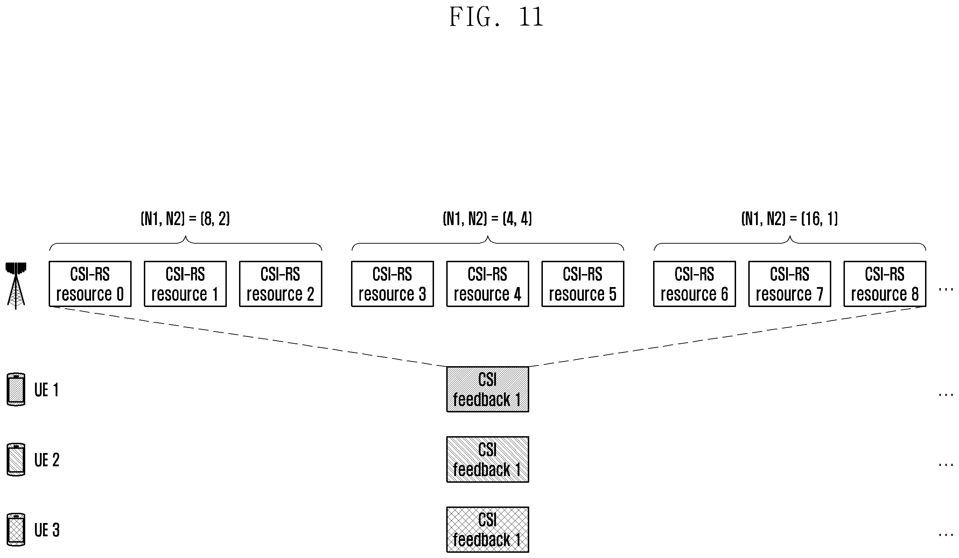

FIG. 11 is a diagram illustrating an example of a CSI feedback method according to an embodiment of the disclosure.

Referring to FIG. 11, according to an embodiment of the disclosure, a UE may perform CSI feedback once for various CSI-RSs/CSI-RS resources received through port virtualization. When a base station applies port virtualization to a particular CSI-RS port and transmits various CSI-RSs/CSI-RS resources, the UE may report CSI at once for all the CSI-RSs/CSI-RS resources (which may include resources to which different port virtualization is applied). According to an embodiment of the disclosure, a data field (or a CSI report field) for such a CSI report may be provided.

FIG. 11 illustrates an example in which the antenna port layout (N₁, N₂) = (8, 2) corresponds to CSI-RS resources 0, 1, and 2, the antenna port layout (N₁, N₂) = (4, 4) corresponds to CSI-RS resources 3, 4, and 5, and the antenna port layout (N₁, N₂) = (16, 1) corresponds to CSI-RS resources 6, 7, and 8.

In the example of FIG. 11, according to an embodiment of the disclosure, the UE may report CSI once for CSI-RS resources 0, 1, 2, ..., 8. That is, UE 1, UE 2, and UE 3 may all report CSI feedback 1 for CSI-RS resources 0, 1, 2, ..., 8 to the base station.

According to an embodiment of the disclosure, since the number of CSI feedbacks/CSI reports of the UE is reduced, CSI feedback overhead of the UE may be reduced.

According to an embodiment of the disclosure, in addition to an RRC parameter information element (IE)/field related to a CSI configuration described above, an additional RRC parameter/IE/field may be configured/transmitted and received, and a CSI report field/format/form may be provided correspondingly.

In the description of an embodiment of the disclosure, portvirtualization-Mode (or CSI port virtualization mode configuration) is described as an example of the above-described additional RRC parameter/IE/field. The name of the RRC parameter/IE/field is merely exemplary, and the disclosure is not interpreted as being limited to the corresponding name.

According to an embodiment of the disclosure, portvirtualization-Mode may indicate that port virtualization has been applied at the base station. In addition/alternatively, portvirtualization-Mode may indicate that one or more/multiple CSI-RS resource configurations (CSI-ResourceConfigId) and/or one or more/multiple CodebookConfigs are allowed/included in one CSI-ReportConfig. Since an antenna port layout (N₁, N₂) may be indicated by CodebookConfig, allowing/including one or more/multiple CodebookConfigs may indicate that one or more/multiple antenna port layouts (N₁, N₂) are indicated/may be indicated.

According to an embodiment of the disclosure, portvirtualization-Mode may be transmitted and received through higher layer signaling (e.g., RRC signaling). For example, portvirtualization-Mode may be included in CSI-ReportConfig.

For example, CSI-ReportConfig may be configured as shown in [Table 14].

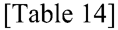

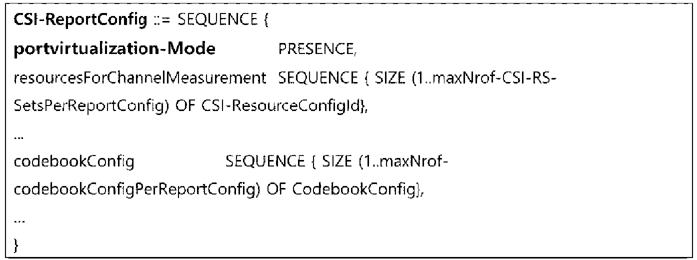

In Table 14, maxNrof-CSI-RS-SetsPerReportConfig may be the maximum number of CSI-RS resource sets (or CSI-ResourceConfig or CSI-ResourceConfigId) (allowed) per CSI-ReportConfig. maxNrof-codebookConfigPerReportConfig may be the maximum number of CodebookConfigs (allowed) per CSI-ReportConfig. The values of maxNrof-CSI-RS-SetsPerReportConfig and maxNrof-codebookConfigPerReportConfig may be predetermined in a standard, but the disclosure is not limited thereto.

Table 14 shows an example in which portvirtualization-Mode having a PRESENCE attribute is included in CSI-ReportConfig. In this case, a UE having received the CSI-ReportConfig including portvirtualization-Mode may identify that port virtualization has been applied at the base station and/or identify that one or more/multiple CSI-RS resource configurations (CSI-ResourceConfigId) and/or one or more/multiple CodebookConfigs are included in or may be included in the CSI-ReportConfig. The attribute is merely exemplary, and the disclosure is not limited thereto. For example, portvirtualization-Mode may indicate whether port virtualization has been applied at the base station and/or whether one or more/multiple CSI-RS resource configurations (CSI-ResourceConfigId) and/or one or more/multiple CodebookConfigs are included/are able to be included in the CSI-ReportConfig.

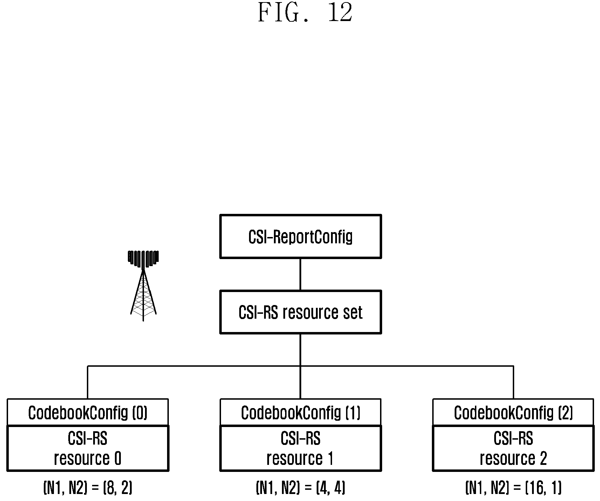

FIG. 12 is a diagram illustrating an example of a CSI report configuration according to an embodiment of the disclosure. Specifically, FIG. 12 illustrates an example in which portvirtualization-Mode is included in CSI-ReportConfig and a single CSI-RS resource set and multiple CodebookConfigs are included in the CSI-ReportConfig (single CSI-RS resource set, multiple CodebookConfig mapping).

Referring to FIG. 12, the CSI-RS resource set may include CSI-RS resources 0, 1, and 2. In this case, the number of CSI-RS resources within one CSI-RS resource set is ${K}_{S}^{CSI - RS} = 3$.

CSI-RS resource 0 corresponds to CodebookConfig (0), and CodebookConfig (0) may indicate the antenna port layout (N₁, N₂) = (8, 2).

CSI-RS resource 1 corresponds to CodebookConfig (1), and CodebookConfig (1) may indicate the antenna port layout (N₁, N₂) = (4, 4).

CSI-RS resource 2 corresponds to CodebookConfig (2), and CodebookConfig (2) may indicate the antenna port layout (N₁, N₂) = (16, 1).

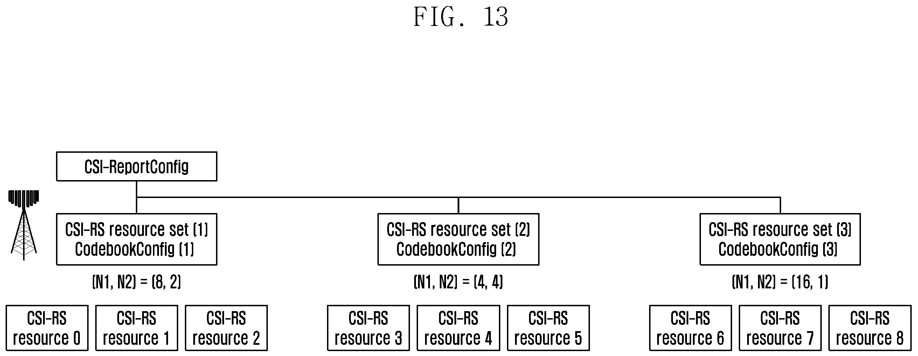

FIG. 13 is a diagram illustrating an example of a CSI report configuration according to an embodiment of the disclosure. Specifically, FIG. 13 illustrates an example in which portvirtualization-Mode is included in CSI-ReportConfig and multiple CSI-RS resource sets and multiple CodebookConfigs are included in the CSI-ReportConfig (multiple CSI-RS resource set, multiple CodebookConfig mapping). FIG. 13 illustrates an example in which 32 CSI-RS ports and 256 TXRUs (or digital ports) are operated, but the disclosure is not limited thereto.

Referring to FIG. 13, CSI-RS resource set (1) may include CSI-RS resources 0, 1, and 2. CSI-RS resource set (2) may include CSI-RS resources 3, 4, and 5. CSI-RS resource set (3) may include CSI-RS resources 6, 7, and 8. In this case, the number of CSI-RS resources within one CSI-RS resource set is ${K}_{S}^{CSI - RS} = 3$.

Different CSI-RS resource sets may correspond to different CodebookConfigs.

CSI-RS resource (1) corresponds to CodebookConfig (1), and CodebookConfig (1) may indicate the antenna port layout (N₁, N₂) = (8, 2).

CSI-RS resource (2) corresponds to CodebookConfig (2), and CodebookConfig (2) may indicate the antenna port layout (N₁, N₂) = (4, 4).

CSI-RS resource (3) corresponds to CodebookConfig (3), and CodebookConfig (3) may indicate the antenna port layout (N₁, N₂) = (16, 1).

Referring to the examples of FIGS. 12 and 13, according to an embodiment of the disclosure, various CodebookConfigs may be provided to the UE through one CSI report configuration. Accordingly, the UE is able to perform channel sounding for various channel environments. In addition, since the UE needs only to transmit one CSI report corresponding thereto to the base station, overhead for CSI reporting may be reduced.

According to an embodiment of the disclosure, a CSI report of the UE may have various formats/forms. The base station may configure the format/form of a CSI report for the UE, and the UE may transmit a CSI report in the form configured by the base station. For example, a CSI report of the UE may be transmitted as uplink control information (UCI).

According to an embodiment of the disclosure, an RRC parameter IE/field related to a configuration of the format/form of a CSI report described above may be configured/transmitted and received. The UE may perform CSI reporting by using a CSI report field/format/form corresponding thereto.

In the description of an embodiment of the disclosure, codeBookBasedBeamReporting is described as an example of the above-described additional RRC parameter/IE/field. The name of the RRC parameter/IE/field is merely exemplary, and the disclosure is not interpreted as being limited to the corresponding name.

According to an embodiment of the disclosure, codeBookBasedBeamReporting may be transmitted and received through higher layer signaling (e.g., RRC signaling). For example, codeBookBasedBeamReporting may be included in CSI-ReportConfig.

For example, CSI-ReportConfig may be configured as shown in [Table 15].

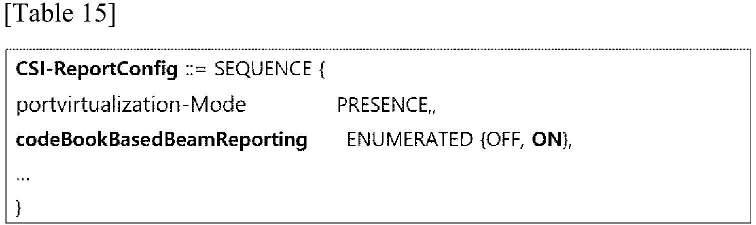

Table 15 shows an example in which codeBookBasedBeamReporting having an ENUMERATED attribute is included in CSI-ReportConfig. In this case, a UE having received CSI-ReportConfig including codeBookBasedBeamReporting may transmit CSI reports of different forms according to whether codeBookBasedBeamReporting is OFF or ON. A form of CSI feedback may be different according to a value of codeBookBasedBeamReporting. The attribute is merely exemplary, and the disclosure is not limited thereto. For example, when codeBookBasedBeamReporting is included in CSI-ReportConfig, codeBookBasedBeamReporting may be identified as being ON, and when codeBookBasedBeamReporting is not included, codeBookBasedBeamReporting may be identified as being OFF.

According to an embodiment of the disclosure, when portvirtualization-Mode is PRESENCE, a parameter ${K}_{R}^{CSI - RS}$ indicating the number of all CSI-RS resources indicated by multiple CSI-ResourceSets indicated by CSI-ReportConfig may be defined. The parameter ${K}_{R}^{CSI - RS}$ may be the number of all CSI-RS resources included in CSI-ReportConfig. Referring again to FIG. 13, an example in which the number of all CSI-RS resources included in CSI-ReportConfig is ${K}_{R}^{CSI - RS} = 9$, and the number of CSI-RS resources in one CSI-RS resource set is ${K}_{S}^{CSI - RS} = 3$ is illustrated. When ${K}_{R}^{CSI - RS} = x$ and ${K}_{S}^{CSI - RS} = y$, the number of CSI-RS resource sets may be understood as $\left⌈\frac{x}{y}\right⌉$. The CSI-RS resources included in each CSI-RS resource set may follow an ascending order of an index of the CSI-RS resource set and an ascending order of an index of the CSI-RS resource. Referring again to FIG. 13, in the case of CSI-RS resources 0, 1, 2, ..., 8 and CSI-RS resource sets (1), (2), and (3), CSI-RS resources 0, 1, and 2 may be included in CSI-RS resource set (1), CSI-RS resources 3, 4, and 5 may be included in CSI-RS resource set (2), and CSI-RS resources 6, 7, and 8 may be included in CSI-RS resource set (3).

According to an embodiment of the disclosure, a form/format of a CSI report may be different according to whether the CSI report is related to CSI (CSI related, e.g., PMI, CQI, RI, LI, ...), and/or related to L1-RSRP, and/or whether codeBookBasedBeamReporting is OFF or ON. Whether a CSI report is related to CSI or related to L1-RSRP may be configured by a base station for a UE.

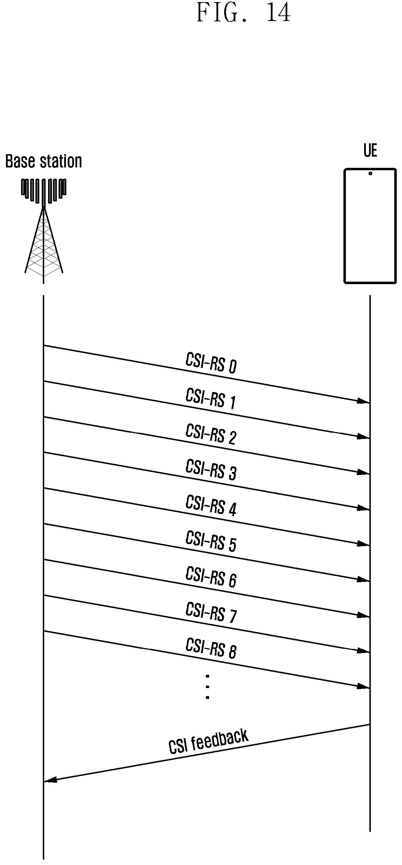

FIG. 14 is a diagram illustrating an example of CSI-RS transmission of a base station and CSI feedback transmission of a UE according to an embodiment of the disclosure.

Referring to FIG. 14, a base station may transmit CSI-RSs 0, 1, 2, ..., 8 to a UE, and the UE may transmit CSI feedback to the base station in response thereto. When portvirtualization-Mode is included in CSI-ReportConfig, CSI-RSs 0, 1, 2, ..., 8 correspond to one CSI-ReportConfig, and the UE may report one CSI feedback related to CSI-RSs 0, 1, 2, ..., 8. Hereinafter, types of a CSI report/feedback according to an embodiment of the disclosure will be described in detail.

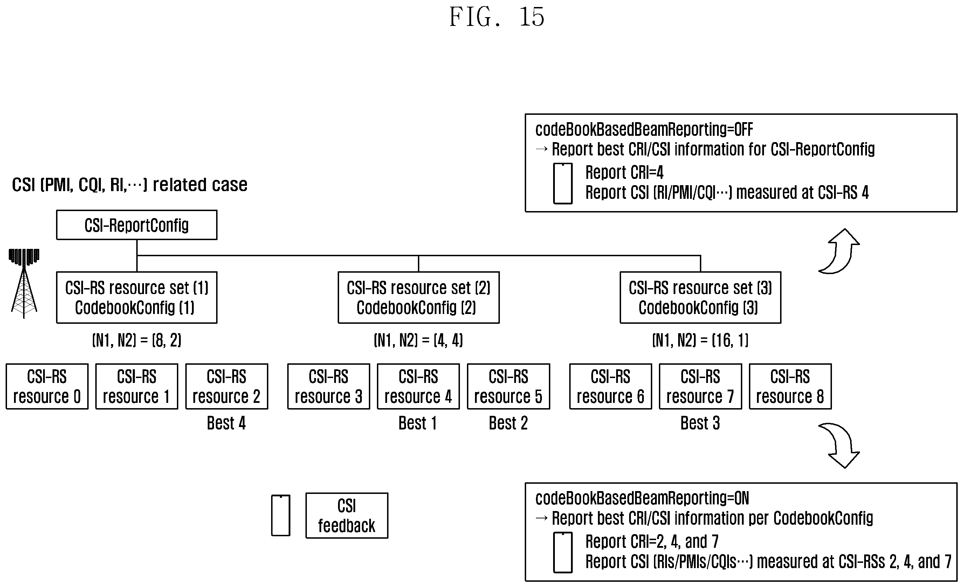

FIG. 15 is a diagram illustrating an example of a CSI report of a UE according to an embodiment of the disclosure. FIG. 15 illustrates an example in which a CSI report is related to CSI (CSI related, e.g., PMI, CQI, RI, LI, ...). For a more detailed description of the example of CSI-ReportConfig illustrated in FIG. 15, reference may be made to the description of FIG. 13.

Referring to FIG. 15, CSI-RS resource set (1) may include CSI-RS resources 0, 1, and 2. CSI-RS resource set (2) may include CSI-RS resources 3, 4, and 5. CSI-RS resource set (3) may include CSI-RS resources 6, 7, and 8. Here, among CSI-RS resource sets 0, 1, 2, ..., 8, it is assumed that CSI-RS resource 4, CSI-RS resource 5, CSI-RS resource 7, and CSI-RS resource 2 are sequentially the best CSI-RS resources.

For example, when codeBookBasedBeamReporting is OFF, the UE may report a CSI-related parameter (e.g., a PMI, a CQI, an RI, an LI, ...) together with a CRI. For a CRI report of the UE, $\left⌈{log}_{2} {K}_{R}^{CRI - RS}\right⌉$ bits may be used. This may be reported through UCI. When codeBookBasedBeamReporting is OFF, the best CRI/CSI information for CSI-ReportConfig may be reported. That is, the UE may report CRI = 4 and may report a CSI-related parameter, such as a PMI, a CQI, an RI, or an LI, measured by CSI-RS resource 4. That is, when codeBookBasedBeamReporting is OFF, the best CSI resource may be determined/decided/identified in units of CSI-ReportConfig.

For example, when codeBookBasedBeamReporting is ON, the UE may report CSI-related parameters (e.g., PMIs, CQIs, RIs, LIs, ...) (corresponding to the number of CodebookConfigs for CSI-ReportConfig) together with corresponding CRIs. For a CRI report of the UE, $\left(The number of CodebookConfigs for CSI-ReportConfig\right) \times \left⌈{log}_{2} {K}_{R}^{CSI - RS}\right⌉$ bits may be used. That is, the UE may transmit multiple CRIs by using $\left(The number of CodebookConfigs for CSI-ReportConfig\right) \times \left⌈{log}_{2} {K}_{R}^{CSI - RS}\right⌉$ bits. This may be reported through UCI. When codeBookBasedBeamReporting is ON, the best CRI/CSI information may be reported for each CodebookConfig in CSI-ReportConfig. That is, the UE may report CRI = 2, 4, and 7 and may report CSI-related parameters, such as PMIs, CQIs, RIs, or LIs, measured by CSI-RS resources 2, 4, and 7. That is, when codeBookBasedBeamReporting is ON, the best CSI resource may be determined/decided/identified in units of CSI-CodebookConfig. For example, an order of reported CRIs may be sorted in an order of best quality. For example, the CRIs may be reported in an order of CRIs 4, 7, and 2. For example, CSI-related parameters corresponding thereto may also be sorted to correspond to the CRIs.

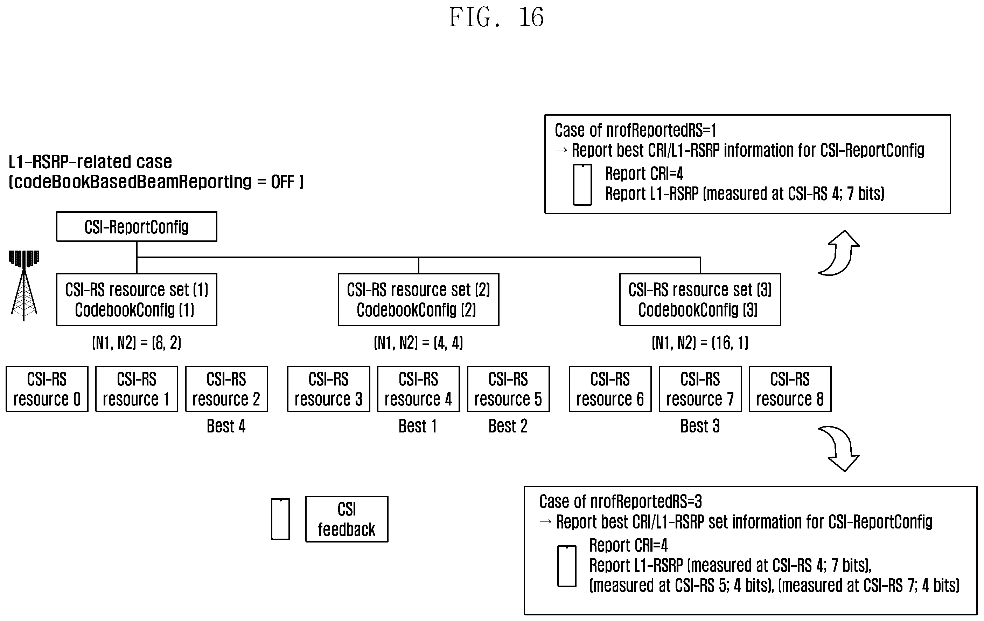

FIG. 16 is a diagram illustrating an example of a CSI report of a UE according to an embodiment of the disclosure. FIG. 16 illustrates an example in which a CSI report is related to L1-RSRP. For a more detailed description of the example of CSI-ReportConfig illustrated in FIG. 16, reference may be made to the description of FIG. 13.

Referring to FIG. 16, CSI-RS resource set (1) may include CSI-RS resources 0, 1, and 2. CSI-RS resource set (2) may include CSI-RS resources 3, 4, and 5. CSI-RS resource set (3) may include CSI-RS resources 6, 7, and 8. Here, among CSI-RS resource sets 0, 1, 2, ..., 8, it is assumed that CSI-RS resource 4, CSI-RS resource 5, CSI-RS resource 7, and CSI-RS resource 2 are sequentially the best CSI-RS resources.

For example, when codeBookBasedBeamReporting is OFF, the UE may report L1-RSRP, based on all CSI-RS resources included in CSI-ReportConfig (L1-RSRP values based on whole CSI-RS resources in CSI-ReportConfig).

For example, when codeBookBasedBeamReporting is OFF and nrofReportedRS included in CSI-ReportConfig is configured as 1 (nrofReportedRS = 1), the UE may report L1-RSRP (e.g., 7 bits) together with a CRI. For a CRI report of the UE, $\left⌈{log}_{2} {K}_{R}^{CSI - RS}\right⌉$ bits may be used. This may be reported through UCI. That is, the UE may report CRI = 4 and may report a L1-RSRP measured by CSI-RS resource 4 (e.g., by using 7 bits).

For example, when codeBookBasedBeamReporting is OFF and nrofReportedRS included in CSI-ReportConfig is configured as a value greater than 1 (nrofReportedRS > 1), the UE may report the largest L1-RSRP by using 7 bits, report a CRI corresponding thereto by using $\left⌈{log}_{2} {K}_{R}^{CSI - RS}\right⌉$ bits, and report remaining L1-RSRPs by using 4-bit values, based on differential values. This may be reported through UCI. The remaining L1-RSRPs may be reported as differential L1-RSRPs. For example, the differential L1-RSRP may be quantized into a 4-bit value with a step size of 2 dB. For example, when nrofReportedRS = 3, the UE may report CRI = 4 and may report an L1-RSRP measured by CSI-RS resource 4 (e.g., by using 7 bits). In addition, the UE may report an L1-RSRP measured by CSI-RS resource 5 and an L1-RSRP measured by CSI-RS resource 7 as differential L1-RSRPs by using 4 bits each.

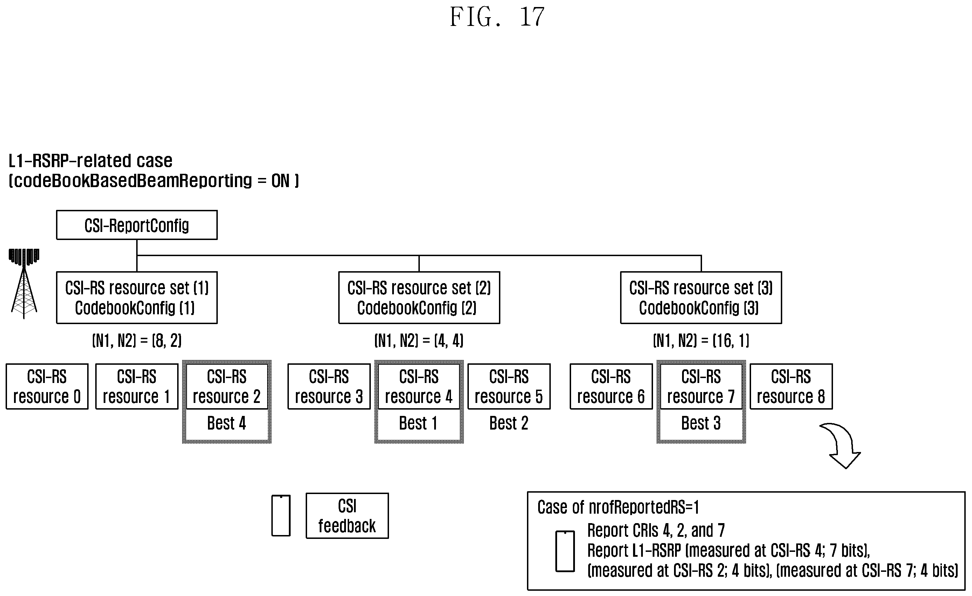

FIG. 17 is a diagram illustrating an example of a CSI report of a UE according to an embodiment of the disclosure. FIG. 17 illustrates an example in which a CSI report is related to L1-RSRP. For a more detailed description of the example of CSI-ReportConfig illustrated in FIG. 17, reference may be made to the description of FIG. 13.

Referring to FIG. 17, CSI-RS resource set (1) may include CSI-RS resources 0, 1, and 2. CSI-RS resource set (2) may include CSI-RS resources 3, 4, and 5. CSI-RS resource set (3) may include CSI-RS resources 6, 7, and 8. Here, among CSI-RS resource sets 0, 1, 2, ..., 8, it is assumed that CSI-RS resource 4, CSI-RS resource 5, CSI-RS resource 7, and CSI-RS resource 2 are sequentially the best CSI-RS resources.

For example, when codeBookBasedBeamReporting is ON, the UE may report L1-RSRP for each CodebookConfig, based on all CSI-RS resources included in CSI-ReportConfig.

For example, when codeBookBasedBeamReporting is ON and nrofReportedRS included in CSI-ReportConfig is configured as 1 (nrofReportedRS = 1), the UE may report the best L1-RSRP for each CodebookConfig. Here, among reported L1-RSRPs, the largest L1-RSRP may be reported using, for example, 7 bits (e.g., may be quantized into 7 bits), and the remaining L1-RSRPs may be reported as differential L1-RSRPs. For example, the differential L1-RSRP may be quantized into a 4-bit value. (UE reports best L1-RSRP per CodebookConfig where the largest L1-RSRP is quantized to a 7-bit value and the differential L1-RSRP is quantized to a 4-bit value). For example, the UE may report multiple CRIs, and for example, $\left(The number of CodebookConfigs for CSI-ReportConfig\right) \times \left⌈{log}_{2} {K}_{R}^{CSI - RS}\right⌉$ bits may be used. For example, L1-RSRPs and/or CRIs may be reported in a descending order. For example, L1-RSRPs and/or CRIs may be reported in an order from the best L1-RSRP and/or CRI to the worst L1-RSRP and/or CRI. That is, within UCI bits reported by the UE, L1-RSRPs and/or CRIs may be included in an order from the best L1-RSRP and/or CRI to the worst L1-RSRP and/or CRI.

For example, when nrofReportedRS = 1, the UE may report CRI = 4, 2, and 7 and may report an L1-RSRP measured by CSI-RS resource 4 (e.g., by using 7 bits). In addition, the UE may report an L1-RSRP measured by CSI-RS resource 2 and an L1-RSRP measured by CSI-RS resource 7 as differential L1-RSRPs by using 4 bits each.

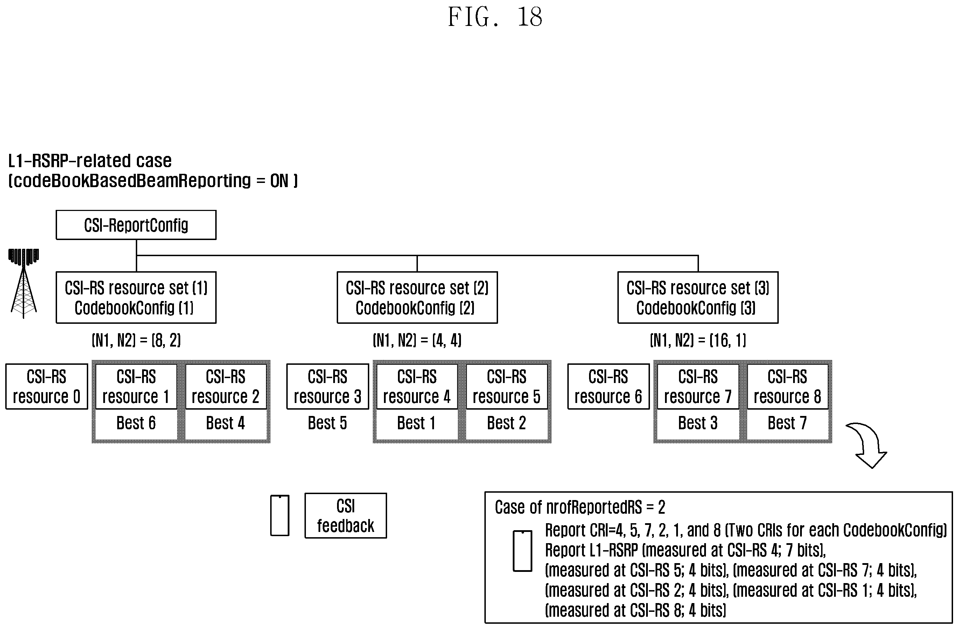

FIG. 18 is a diagram illustrating an example of a CSI report of a UE according to an embodiment of the disclosure. FIG. 18 illustrates an example in which a CSI report is related to L1-RSRP. For a more detailed description of the example of CSI-ReportConfig illustrated in FIG. 18, reference may be made to the description of FIG. 13.

Referring to FIG. 18, CSI-RS resource set (1) may include CSI-RS resources 0, 1, and 2. CSI-RS resource set (2) may include CSI-RS resources 3, 4, and 5. CSI-RS resource set (3) may include CSI-RS resources 6, 7, and 8. Here, among CSI-RS resource sets 0, 1, 2, ..., 8, it is assumed that CSI-RS resource 4, CSI-RS resource 5, CSI-RS resource 7, CSI-RS resource 2, CSI-RS resource 3, CSI-RS resource 1, and CSI-RS resource 8 are sequentially the best CSI-RS resources.

For example, when codeBookBasedBeamReporting is ON, the UE may report L1-RSRP for each CodebookConfig, based on all CSI-RS resources included in CSI-ReportConfig.

For example, when codeBookBasedBeamReporting is ON and nrofReportedRS included in CSI-ReportConfig is configured as a value greater than 1 (nrofReportedRS > 1) (here, $nrofReportedRS < {K}_{R}^{CSI - RS}$), the UE may report nrofReportedRS number of L1-RSRPs for each CodebookConfig. Here, among reported L1-RSRPs, the largest L1-RSRP may be reported using, for example, 7 bits (e.g., may be quantized into 7 bits), and the remaining L1-RSRPs may be reported as differential L1-RSRPs. For example, the differential L1-RSRP may be quantized into a 4-bit value. (UE reports nrofReportedRS of L1-RSRP per CodebookConfig where the largest L1-RSRP is quantized to a 7-bit value and the differential L1-RSRP is quantized to a 4-bit value). For example, the UE may report multiple CRIs, and for example, $\left(nrofReportedRS\right) \times$ $\left(The number of CodebookConfigs for CSI-ReportConfig\right) \times \left⌈{log}_{2} {K}_{R}^{CSI - RS}\right⌉$ bits may be used. For example, L1-RSRPs and/or CRIs may be reported in a descending order. For example, L1-RSRPs and/or CRIs may be reported in an order from the best L1-RSRP and/or CRI to the worst L1-RSRP and/or CRI. That is, within UCI bits reported by the UE, L1-RSRPs and/or CRIs may be included in an order from the best L1-RSRP and/or CRI to the worst L1-RSRP and/or CRI.

According to an embodiment of the disclosure, for a multi-CRI report of the UE, (nrofReportedRS) × (The number of CodebookConfigs for $\left.CSI-ReportConfig\right) \times \left⌈{log}_{2} {K}_{R}^{CSI - RS}\right⌉$ bits may be used ( $1 = \left〈nrofReportedRS\left〈{K}_{R}^{CSI - RS}\right.\right.$).

For example, when nrofReportedRS = 2, the UE may report CRI= 4, 5, 7, 2, 1, and 8 (two CRIs for each CodebookConfig) and may report an L1-RSRP measured by CSI-RS resource 4 (e.g., by using 7 bits). In addition, the UE may report an L1-RSRP measured by CSI-RS resource 4, an L1-RSRP measured by CSI-RS resource 5, an L1-RSRP measured by CSI-RS resource 7, an L1-RSRP measured by CSI-RS resource 2, an L1-RSRP measured by CSI-RS resource 1, and an L1-RSRP measured by CSI-RS resource 8 as differential L1-RSRPs by using 4 bits each.

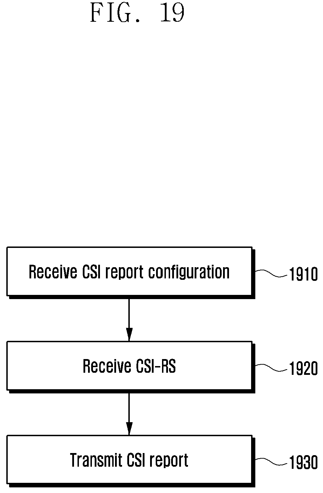

FIG. 19 illustrates an example of an operation of a UE according to an embodiment of the disclosure. Various modifications may be made to the method illustrated in the flowchart of FIG. 19. For example, a series of operations are illustrated, but various operations in each drawing may overlap with each other, occur in parallel, occur in a different sequence, or occur several times. In another example, an operation may be omitted or replaced with another operation.

Referring to FIG. 19, in operation 1910 according to an embodiment, a UE may receive a channel state information (CSI) report configuration. The CSI report configuration may be received through higher layer signaling. The CSI report configuration may include multiple channel state information reference signal (CSI-RS) resources.

In operation 1920 according to an embodiment, the UE may receive multiple CSI-RSs corresponding to the multiple CSI-RS resources. For example, when the CSI report configuration includes information indicating CSI port virtualization related to the multiple CSI-RS resources, the multiple CSI-RS resources may correspond to the multiple codebook configurations.

In operation 1930 according to an embodiment, the UE may transmit a CSI report.

For details of a UE operation according to an embodiment of the disclosure described above, reference may be made to the above description of an embodiment of the disclosure.

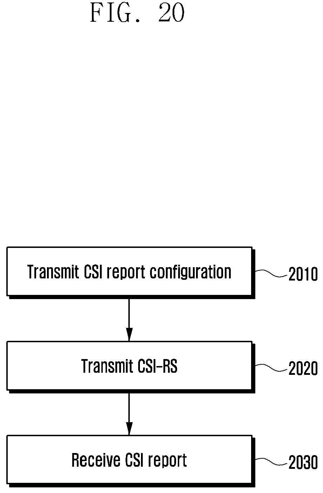

FIG. 20 illustrates an example of an operation of a base station according to an embodiment of the disclosure. Various modifications may be made to the method illustrated in the flowchart of FIG. 20. For example, a series of operations are illustrated, but various operations in each drawing may overlap with each other, occur in parallel, occur in a different sequence, or occur several times. In another example, an operation may be omitted or replaced with another operation.

Referring to FIG. 20, in operation 2010 according to an embodiment, a base station may transmit a channel state information (CSI) report configuration. The CSI report configuration may be received through higher layer signaling. The CSI report configuration may include multiple channel state information reference signal (CSI-RS) resources.

In operation 2020 according to an embodiment, the base station may transmit multiple CSI-RSs corresponding to the multiple CSI-RS resources. For example, when the CSI report configuration includes information indicating CSI port virtualization related to the multiple CSI-RS resources, the multiple CSI-RS resources may correspond to the multiple codebook configurations.

In operation 2030 according to an embodiment, the base station may transmit a CSI report.

For details of a base station operation according to an embodiment of the disclosure described above, reference may be made to the above description of an embodiment of the disclosure.

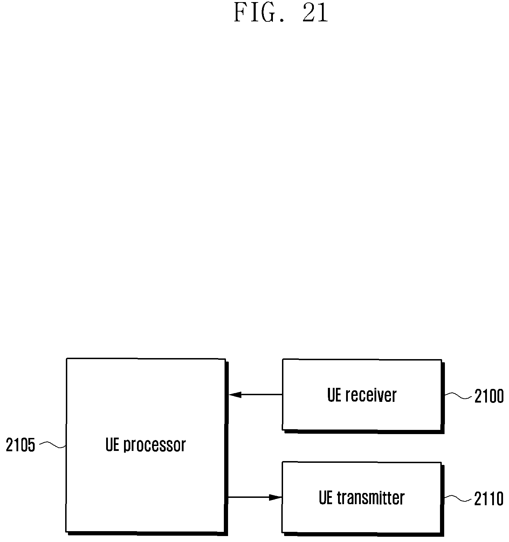

FIG. 21 illustrates a structure of a UE in a wireless communication system according to an embodiment of the disclosure.

Referring to FIG. 21, the UE may include a transceiver, which refers to a UE receiver 2100 and a UE transmitter 2110 as a whole, a memory (not illustrated), and a UE processor 2105 (or UE controller or processor). The UE transceiver 2100 and 2110, the memory, and the UE processor 2105 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

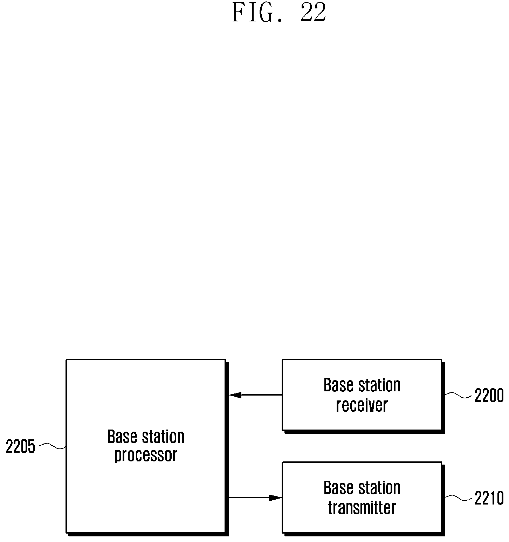

FIG. 22 illustrates a structure of a base station in a wireless communication system according to an embodiment of the disclosure.

Referring to FIG. 22, the base station may include a transceiver, which refers to a base station receiver 2200 and a base station transmitter 2210 as a whole, a memory (not illustrated), and a base station processor 2205 (or base station controller or processor). The base station transceiver 2200 and 2210, the memory, and the base station processor 2205 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described specific embodiments of the disclosure, an element included in an embodiment is expressed in the singular or the plural according to presented specific embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a communication system, the method comprising:
receiving, via higher layer signaling, a channel state information (CSI) report configuration, wherein the CSI report configuration includes multiple channel state information reference signal (CSI-RS) resources;
in case that the CSI report configuration includes multiple codebook configurations, identifying a correspondence relationship between the multiple CSI-RS resources and the multiple codebook configurations;
acquiring a CSI report, based on the correspondence relationship; and
transmitting the CSI report.

2. The method of claim 1, wherein in case that the CSI report configuration includes information indicating CSI port virtualization related to the multiple CSI-RS resources, the CSI report configuration includes the multiple codebook configurations.

3. The method of claim 1, wherein in case that the CSI report is configured as a CSI-related parameter:
in case that the CSI report configuration includes a codebook-level CSI report configuration,
the CSI report includes a first number of bits for indicating multiple CSI-RS resource indicators (CRIs) for multiple codebook configurations, the first number satisfies a product of the number of the multiple codebook configurations and $\left⌈{log}_{2} {K}_{R}^{CSI - RS}\right⌉ , {K}_{R}^{CSI - RS}$is the number of the multiple CSI-RS resources, and the CSI report includes multiple CSI-related parameters corresponding to the multiple CRIs; and
in case that the CSI report configuration does not include a codebook-level CSI report configuration,
the CSI report includes a second number of bits for indicating one CRI, the second number is $\left⌈{log}_{2} {K}_{R}^{CSI - RS}\right⌉$, and the CSI report includes a CSI-related parameter corresponding to the one CRI.

4. The method of claim 1, wherein in case that the CSI report is configured as a reference signal received power (RSRP)-related parameter:
in case that the CSI report configuration includes a codebook-level CSI report configuration,
the CSI report includes a third number of bits for indicating multiple CRIs for multiple codebook configurations, the third number satisfies a product of the number of the multiple codebook configurations, the number of reported reference signals (RSs), and $\left⌈{log}_{2} {K}_{R}^{CSI - RS}\right⌉ , {K}_{R}^{CSI - RS}$ is the number of the multiple CSI-RS resources, the number of the reported RSs is configured through the higher layer signaling, the CSI report includes multiple RSRPs corresponding to the multiple CRIs, a largest RSRP among the multiple RSRPs is indicated by 7 bits, and remaining RSRPs except for the largest RSRP among the multiple RSRPs are each indicated as differential values, based on 4 bits; and
in case that the CSI report configuration does not include a codebook-level CSI report configuration,
the CSI report includes a fourth number of bits for indicating one CRI, and the fourth number is $\left⌈{log}_{2} {K}_{R}^{CSI - RS}\right⌉$,
wherein the CSI report includes an RSRP corresponding to the one CRI in case that the number of the reported RSs is configured as 1, and the one RSRP is indicated by 7 bits, and
wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

5. The method of claim 1, wherein the correspondence relationship is identified based on the multiple CSI-RS resources being distributed in ascending order according to an ascending order of the multiple codebook configurations.

6. A terminal in a communication system, the terminal comprising:
a transceiver; and
a processor connected to the transceiver,
wherein the processor is configured to:
receive, via higher layer signaling, a channel state information (CSI) report configuration, wherein the CSI report configuration includes multiple channel state information reference signal (CSI-RS) resources;
in case that the CSI report configuration includes multiple codebook configurations, identify a correspondence relationship between the multiple CSI-RS resources and the multiple codebook configurations;
acquire a CSI report, based on the correspondence relationship; and
transmit the CSI report.

7. The terminal of claim 6, wherein in case that the CSI report configuration includes information indicating CSI port virtualization related to the multiple CSI-RS resources, the CSI report configuration includes the multiple codebook configurations, and
wherein the correspondence relationship is identified based on the multiple CSI-RS resources being distributed in ascending order according to an ascending order of the multiple codebook configurations.

8. The terminal of claim 6, wherein in case that the CSI report is configured as a CSI-related parameter:
in case that the CSI report configuration includes a codebook-level CSI report configuration,
the CSI report includes a first number of bits for indicating multiple CSI-RS resource indicators (CRIs) for multiple codebook configurations, the first number satisfies a product of the number of the multiple codebook configurations and $\left⌈{log}_{2} {K}_{R}^{CSI - RS}\right⌉ , {K}_{R}^{CSI - RS}$ is the number of the multiple CSI-RS resources, and the CSI report includes multiple CSI-related parameters corresponding to the multiple CRIs; and
in case that the CSI report configuration does not include a codebook-level CSI report configuration,
the CSI report includes a second number of bits for indicating one CRI, the second number is $\left⌈{log}_{2} {K}_{R}^{CSI - RS}\right⌉$, and the CSI report includes a CSI-related parameter corresponding to the one CRI, and
wherein in case that the CSI report is configured as a reference signal received power (RSRP)-related parameter:
in case that the CSI report configuration includes a codebook-level CSI report configuration,
the CSI report includes a third number of bits for indicating multiple CRIs for multiple codebook configurations, the third number satisfies a product of the number of the multiple codebook configurations, the number of reported reference signals (RSs), and $\left⌈{log}_{2} {K}_{R}^{CSI - RS}\right⌉ , {K}_{R}^{CSI - RS}$ is the number of the multiple CSI-RS resources, the number of the reported RSs is configured through the higher layer signaling, the CSI report includes multiple RSRPs corresponding to the multiple CRIs, a largest RSRP among the multiple RSRPs is indicated by 7 bits, and remaining RSRPs except for the largest RSRP among the multiple RSRPs are each indicated as differential values, based on 4 bits; and
in case that the CSI report configuration does not include a codebook-level CSI report configuration,
the CSI report includes a fourth number of bits for indicating one CRI, and the fourth number is $\left⌈{log}_{2} {K}_{R}^{CSI - RS}\right⌉$,
wherein the CSI report includes an RSRP corresponding to the one CRI in case that the number of the reported RSs is configured as 1, and the one RSRP is indicated by 7 bits, and
wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

9. A method performed by a base station in a communication system, the method comprising:
transmitting, via higher layer signaling, a channel state information (CSI) report configuration, wherein the CSI report configuration includes multiple channel state information reference signal (CSI-RS) resources; and
receiving a CSI report related to the CSI report configuration,
wherein in case that the CSI report configuration includes multiple codebook configurations, a correspondence relationship between the multiple CSI-RS resources and the multiple codebook configurations is satisfied.

10. The method of claim 9, wherein in case that the CSI report configuration includes information indicating CSI port virtualization related to the multiple CSI-RS resources, the CSI report configuration includes the multiple codebook configurations, and
wherein the correspondence relationship is satisfied based on the multiple CSI-RS resources being distributed in ascending order according to an ascending order of the multiple codebook configurations.

11. The method of claim 9, wherein in case that the CSI report is configured as a CSI-related parameter:
in case that the CSI report configuration includes a codebook-level CSI report configuration,
the CSI report includes a first number of bits for indicating multiple CSI-RS resource indicators (CRIs) for multiple codebook configurations, the first number satisfies a product of the number of the multiple codebook configurations and $\left⌈{log}_{2} {K}_{R}^{CSI - RS}\right⌉ , {K}_{R}^{CSI - RS}$ is the number of the multiple CSI-RS resources, and the CSI report includes multiple CSI-related parameters corresponding to the multiple CRIs; and
in case that the CSI report configuration does not include a codebook-level CSI report configuration,
the CSI report includes a second number of bits for indicating one CRI, the second number is $\left⌈{log}_{2} {K}_{R}^{CSI - RS}\right⌉$, and the CSI report includes a CSI-related parameter corresponding to the one CRI, and
wherein in case that the CSI report is configured as a reference signal received power (RSRP)-related parameter:
in case that the CSI report configuration includes a codebook-level CSI report configuration,
the CSI report includes a third number of bits for indicating multiple CRIs for multiple codebook configurations, the third number satisfies a product of the number of the multiple codebook configurations, the number of reported reference signals (RSs), and $\left⌈{log}_{2} {K}_{R}^{CSI - RS}\right⌉ , {K}_{R}^{CSI - RS}$ is the number of the multiple CSI-RS resources, the number of the reported RSs is configured through the higher layer signaling, the CSI report includes multiple RSRPs corresponding to the multiple CRIs, a largest RSRP among the multiple RSRPs is indicated by 7 bits, and remaining RSRPs except for the largest RSRP among the multiple RSRPs are each indicated as differential values, based on 4 bits; and
in case that the CSI report configuration does not include a codebook-level CSI report configuration,
the CSI report includes a fourth number of bits for indicating one CRI, and the fourth number is $\left⌈{log}_{2} {K}_{R}^{CSI - RS}\right⌉$,
wherein the CSI report includes an RSRP corresponding to the one CRI in case that the number of the reported RSs is configured as 1, and the one RSRP is indicated by 7 bits, and
wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.

12. A base station in a communication system, the base station comprising:
a transceiver; and
a processor connected to the transceiver,
wherein the processor is configured to:
transmit, via higher layer signaling, a channel state information (CSI) report configuration, wherein the CSI report configuration includes multiple channel state information reference signal (CSI-RS) resources; and
receive a CSI report related to the CSI report configuration, and
wherein in case that the CSI report configuration includes multiple codebook configurations, a correspondence relationship between the multiple CSI-RS resources and the multiple codebook configurations is satisfied.

13. The base station of claim 12, wherein in case that the CSI report configuration includes information indicating CSI port virtualization related to the multiple CSI-RS resources, the CSI report configuration includes the multiple codebook configurations, and
wherein the correspondence relationship is satisfied based on the multiple CSI-RS resources being distributed in ascending order according to an ascending order of the multiple codebook configurations.

14. The base station of claim 12, wherein in case that the CSI report is configured as a CSI-related parameter:
in case that the CSI report configuration includes a codebook-level CSI report configuration,
the CSI report includes a first number of bits for indicating multiple CSI-RS resource indicators (CRIs) for multiple codebook configurations, the first number satisfies a product of the number of the multiple codebook configurations and $\left⌈{log}_{2} {K}_{R}^{CSI - RS}\right⌉ , {K}_{R}^{CSI - RS}$ is the number of the multiple CSI-RS resources, and the CSI report includes multiple CSI-related parameters corresponding to the multiple CRIs; and
in case that the CSI report configuration does not include a codebook-level CSI report configuration,
the CSI report includes a second number of bits for indicating one CRI, the second number is $\left⌈{log}_{2} {K}_{R}^{CSI - RS}\right⌉$, and the CSI report includes a CSI-related parameter corresponding to the one CRI.

15. The base station of claim 12, wherein in case that the CSI report is configured as a reference signal received power (RSRP)-related parameter:
in case that the CSI report configuration includes a codebook-level CSI report configuration,
the CSI report includes a third number of bits for indicating multiple CRIs for multiple codebook configurations, the third number satisfies a product of the number of the multiple codebook configurations, the number of reported reference signals (RSs), and $\left⌈{log}_{2} {K}_{R}^{CSI - RS}\right⌉ , {K}_{R}^{CSI - RS}$ is the number of the multiple CSI-RS resources, the number of the reported RSs is configured through the higher layer signaling, the CSI report includes multiple RSRPs corresponding to the multiple CRIs, a largest RSRP among the multiple RSRPs is indicated by 7 bits, and remaining RSRPs except for the largest RSRP among the multiple RSRPs are each indicated as differential values, based on 4 bits; and
in case that the CSI report configuration does not include a codebook-level CSI report configuration,
the CSI report includes a fourth number of bits for indicating one CRI, and the fourth number is $\left⌈{log}_{2} {K}_{R}^{CSI - RS}\right⌉$,
wherein the CSI report includes an RSRP corresponding to the one CRI in case that the number of the reported RSs is configured as 1, and the one RSRP is indicated by 7 bits, and
wherein the CSI report includes multiple RSRPs in case that the number of the reported RSs is configured as a value greater than 1, the one CRI corresponds to a largest RSRP among the multiple RSRPs, the largest RSRP is indicated by 7 bits, each of remaining RSRPs except for the largest RSRP among the multiple RSRPs is indicated as a differential value, based on 4 bits, and the number of the remaining RSRPs is less than the number of the reported RSs by 1.
